(19) Europäisches Patentamt / European Patent Office / Office européen des brevets

(11) **EP 4 254 710 A1**

(12) **EUROPEAN PATENT APPLICATION**

(43) Date of publication:
**04.10.2023 Bulletin 2023/40**

(21) Application number: **23164859.3**

(22) Date of filing: **28.03.2023**

(51) International Patent Classification (IPC):
**H02J 3/32** (2006.01)        **H02J 3/38** (2006.01)
**H02J 7/00** (2006.01)

(52) Cooperative Patent Classification (CPC):
**H02J 3/32; H02J 3/381; H02J 7/00712;**
**H02J 7/007182;** H02J 2300/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.03.2022 US 202263324525 P**

(71) Applicant: **Solaredge Technologies Ltd.**
**4673335 Herzeliya (IL)**

(72) Inventors:
• **SABAG, Shai**
**4673335 Herzeliya (IL)**
• **SHATON, Avishai**
**4673335 Herzeliya (IL)**

(74) Representative: **V.O.**
**P.O. Box 87930**
**2508 DH Den Haag (NL)**

(54) **SYSTEM AND METHODS FOR CONTROLLING THE CHARGING AND DISCHARGING OF AN ENERGY STORAGE DEVICE**

(57)    A system which may comprise an energy storage, a storage interface and a controller. The energy storage may have a fining energy capacity. The storage interface may be coupled to the energy storage and may be configured to charge or discharge the energy storage. The controller may be configured to determine a state-of-storage (SoS) of the energy storage. The controller may further be configured to control the storage interface to charge and discharge the energy storage based on the state-of-storage of the energy storage, and based on a time-variant state-of-storage upper threshold.

Fig. 1A

**Description**

CROSS-REFERNCE TO RELATED APPLICATIONS

This application claims priority to US Provisional Application No. 63/324,525 filed March 28, 2022. The entire disclosure of the foregoing application is incorporated by reference in its entirety.

BACKGROUND

A power system may comprise a plurality of power sources (e.g., photovoltaic generators, wind turbines, fuel cells, flywheels, supercapacitors, power generators). Each of the plurality of power sources may be connected to a respective power regulator. A group of power regulators may be connected in series or in parallel forming a string of power regulators. The string of power regulators may be connected to a power system central controller (e.g., an inverter, or a combiner) over power lines. For example, the power system central controller may be an inverter converting Direct Current (DC) power from the power lines to Alternating Current (AC) power. The inverter may be connected to a load (e.g., a house, an office, a factory, a warehouse). A power system may include an energy storage. The energy storage may be employed for backup (e.g., during a power outage of a power source such as grid, or when the power source does not produce power), or peak shaving. The energy storage may be charged or discharged based on excess power generated by the power system relative to the power used by the load.

SUMMARY

The following is a simplified summary of some of the application for illustrative purposes only. This summary is not an extensive overview and is not intended to identify key or critical elements of the present disclosure. This summary is not intended to limit or constrain the present disclosure.

The disclosure herein may describe a system comprising a power source, an energy storage, a storage interface, a power manager and a power grid. The power manager may be coupled with power source with the storage interface and with the power grid. The storage interface may be coupled with the power storage. The power manager may comprise a controller and a power converter. The controller may be configured to determine a time-variant state-of-storage upper threshold (SUT) for the energy storage, a state-of-storage of the energy storage, and power drawn by a load. The controller may further be configured to determine the power produced by the power source, and a maximum output power level of a power manager. The state-of-storage may be a state of energy (SOE) or a state of charge (SOC). The controller may be configured to charge the storage based on the power produced by the power source being higher than a maximum output power level from the power manager. The controller may further be configured to charge the storage based on the power produced by the power source being lower than the maximum output power level from power manager, the state-of-storage of the energy storage being lower than the SUT, and the power produced by the power source is higher than the power drawn by the load. The controller may be configured to discharge the storage in case the power produced by the power source is lower than the power manager maximum output, and the state-of-storage is higher than the SUT. The controller may further be configured to discharge the energy storage based on the power produced by the power source being lower than the maximum output power level from power manager, the state-of-storage being lower than the SUT, and the power produced by the power source being lower than the power drawn by the load.

The disclosure herein may describe a method which may comprise determining a time-variant state-of-storage upper threshold and a state-of-storage of an energy storage. The method may further comprise determining a power drawn by a load, a power produced by a power source, and a maximum output power level of a power manager. The method may comprise charging the storage based on the power produced by the power source being higher than the power manager maximum output. The method may further comprise charging the storage based on the power produced by the power source being lower than the power manager maximum output, the state-of-storage being lower than the SUT, and the power produced by the power source being higher than the power drawn by the load. The method may comprise discharging the storage based on the power produced by the power source being lower than the power manager maximum output, and the state-of-storage being higher than the SUT. The method may further comprise discharging the storage based on the power produced by the power source being lower than the power manager maximum output, the state-of- storage being lower than the SUT, and the power produced by the power source being lower than the power drawn by the load.

The disclosure herein may describe a method for determining the state-of- storage upper threshold (SUT). The method may comprise determining a load power consumption prediction of the power predicted to be drawn by a load during a time period, and determining a power production prediction of the power predicted to be produced by a power source during the time period. The method may further comprise determining a maximum output power prediction of the output power level of the power manager for the time period, and determining an excess power production prediction of the power produced by the power source during the time period, based on a difference between the power production prediction and the maximum output power prediction of the power manager. The method may further comprise determining the SUT for the time period based on the excess power production predictions, and a target state-of-storage at the end of the time period.

BRIEF DESCRIPTION OF THE DRAWINGS

Some features are shown by way of example, and not by limitation, in the accompanying drawings. In the drawings, like numerals reference similar elements.

Figures 1A-1D illustrate a power system according to the disclosure, and various examples thereof.

Figures 2A, 2B and 2C show examples of diagrams depicting charging and discharging of an energy storage over a time period according to the disclosure.

Figures 3A, 3B and 3C show an example of diagrams depicting charging and discharging of an energy storage 104 over a time period using a time-variant sate of storage upper threshold according to the disclosure.

Figures 4A-4D show examples of methods for charging and discharging an energy storage based on a time-variant sate of storage upper threshold, or based on a time-variant sate of storage upper threshold and a state-of-storage lower threshold according to the disclosure.

Figures 5A and 5B show an example of diagrams depicting various time dependent parameters, which may be employed for determining a time-variant state-of-storage upper threshold according to the disclosure.

Figure 6 shows an example of a method for determining a time-variant state-of-storage upper threshold according to the disclosure.

Figures 7A, 7C show time diagrams depicting an example of a power production prediction and actual power production.

Figure 7B shows a time diagram of under prediction of the power produced by a power source and resulting time-variant state-of-storage upper threshold, and resulting state-of-storage according to the disclosure.

Figures 7D shows a time diagram, depicting an example an updated time-variant state-of-storage upper threshold, according to the disclosure.

Figure 8A shows a time diagram depicting an example of a power production prediction and a load consumption prediction.

Figure 8B shows a pricing graph, and a time-variant state-of-storage lower threshold, according to the disclosure.

Figure 9, shows an example of a method for determining a time-variant state-of-storage lower threshold, according to the disclosure.

Figures 10A, 10B and 10C show an example of diagrams depicting various time dependent parameters, which may be employed for determining an SUT according to the disclosure.

Figure 11 show an example of a method for determining a time-dependent predicted power converter output power.

Figure 12 shows a method for charging or discharging of an energy storage, as well importing of power to a power grid or exporting of power to a power grid, based on several thresholds.

DETAILED DESCRIPTION

In the following description of the various embodiments, reference is made to the accompanying drawings, which form a part hereof, and in which is shown, by way of illustration, various embodiments in which aspects of the disclosure may be practiced. Other embodiments may be utilized and structural and functional modifications may be made, without departing from the scope of the present disclosure. The terms "comprise" and "comprises" and "comprising," "include" and "includes" and "including," and "have" and "has" and "having" are used synonymously herein (including the claims).

Features disclosed herein may relate to systems and methods for management (e.g., the charging or discharging) of an energy storage in a power system. A power system according to the disclosure may comprise a power source, an energy storage (e.g., battery, supercapacitors, etc.), and a power grid (e.g., a utility grid, a micro grid), all connected to a power manager. The power manager may be configured to provide alternating current (AC) power to a load (e.g., either from the power source, the power gird, or from the storage, or from any combination thereof). For example, the power manager may comprise a power converter (e.g., a power inverter) configured to receive at the input thereof power from a power source (e.g., direct current (DC) power from a DC power source such as a photovoltaic array), and convert the power to AC at determined ratings (e.g., 50 Hz and 230 V, 60 Hz and 120 V). The power manager may further be configured to draw power from the power grid (e.g., import power), or to provide power to the power grid (e.g., export power).

According to some aspects of the disclosure, the power manager may be configured to charge or discharge the energy storage. The power manager may be configured to charge or discharge the energy storage based on a time-variant state-of-storage upper threshold (SUT). The SUT defines time varying threshold of the state-of-storage (e.g., state of energy or state of charge) of the energy storage over a time period (e.g., 8 hours, 12 hours, 24 hours, or 48 hours). The SUT is related to a prediction of excess power produced by the power source. A prediction of excess power produced may relate to a difference between a prediction of the power produced by the power source (e.g., predicted input power) and a prediction of the power usage (e.g., predicted output power, such for consumption or export, as further explained below). According to the disclosure, a controller may direct a storage interface to charge or discharge the energy storage during the time period based on the state-of-storage (SoS) of the energy storage, and the SUT, as further explained below. According to some embodiments of the disclosure, a controller may direct a storage interface to charge or discharge the energy storage during a period of time based on the SoS of the energy storage and a state-of-storage lower threshold (SLT). SLT may be a time-variant SLT (TVSLT).

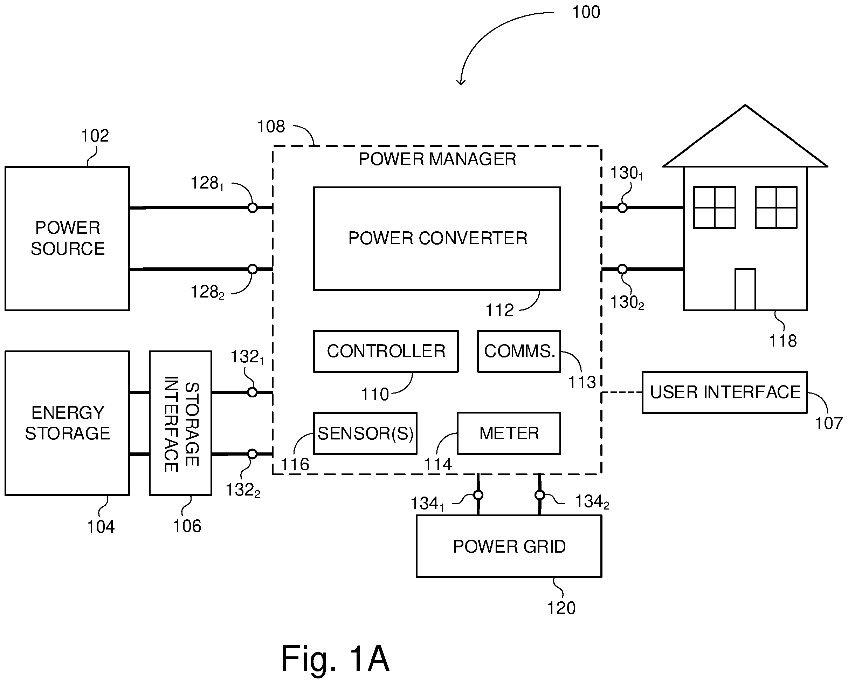

Figures 1A-1D illustrate a power system 100 according to the disclosure, and various examples thereof. Power system 100 may comprise a power source 102 (e.g., a photovoltaic generator or generators, a wind turbine or turbines), an energy storage 104 (e.g., a battery, a supercapacitor, a flywheel, a capacitor array), a storage interface 106, a user interface 107, and power manager 108. Power manager 108 may comprise a controller 110, a power converter 112, communications 113 (also referred to as a "communicator," and abbreviated "comms." in Figures 1A-1D) , a meter 114, and sensor(s) 116. Meter 114 may be coupled with power converter 112 and a power grid 120. Power manager 108 may be a distributed device, where the various modules of power manager 108 (e.g., controller 110, inverter 112, communications 113, meter 114, or sensor(s) 116) may not be within the same casing.

Source side terminals $128_1$ and $128_2$ of power manager 108 may be coupled with power source 102 and with storage interface 106. Storage interface 106 may be coupled with energy storage 104 and with storage terminals $132_1$ and $132_2$ of power manager 108. Load side terminals $130_1$ $130_2$ of power manager 108 may be coupled to a load 118 (e.g., a house, an office, a factory, a warehouse). Grid terminals $134_1$ and $134_2$ of power manager 108 may be coupled with power grid 120. User interface 107 may be coupled with power manager 108.

Power source 102 may be a renewable power source and may comprise a photovoltaic (PV) generator (e.g., a photovoltaic panel), or a plurality of photovoltaic generators generating DC power. A plurality of photovoltaic generators may be coupled in series to form a string. A plurality of strings may be connected in parallel to form an array of photovoltaic generators. The photovoltaic generator, or each of the photovoltaic generators of a plurality of photovoltaic generators may be coupled with a corresponding DC-to-DC (DC/DC) converter configured to harvest power from the corresponding PV generator according to a maximum power point tracking algorithm. The DC/DC power converters may be coupled in series to form a series string. The photovoltaic generator, or each photovoltaic generators of the plurality of photovoltaic generators may be coupled with a corresponding DC-to-AC (DC/AC) micro-inverter configured to extract power from the corresponding PV generator according to a maximum power point tracking algorithm. The DC/AC micro-inverter may be coupled in series or in parallel. Power source 102 may be an AC power source such as a wind turbine, or a plurality of wind turbines generating AC power.

Power converter 112 may be a power inverter. Power converter 112 may comprise a half-bridge, full-bridge (H-Bridge), flying capacitor circuit, cascaded-H-bridge, neutral point clamped (NPC), A-NPC, or a T-type NPC inverting circuit employing two or more conversion levels. Controller 110 may control and monitor power converter 112 by employing a pulse width modulation (PWM) signal. Power converter 112 may operate at a switching frequency between 1KHz - 10MHz. For example, power converter 112 may operate at a switching frequency between 16 KHz - 1 MHz, (e.g., at frequencies which losses may be reduced).

Controller 110 may be a digital signal processing (DSP) circuit, an application specific integrated circuit (ASIC) device, a field programmable gate array (FPGA) device, a microcontroller, or a microprocessor. Controller 110 may be a distributed controller, comprising multiple microcontrollers, microcomputers, or cloud servers. The multiple microcontrollers, microcomputers, or cloud servers may be located at the same location (e.g., at the user premise - on site). The multiple microcontrollers, microcomputers, or cloud servers may be located at different locations. For example, some microcontrollers or microcomputers may be located at the user premise while other microcontrollers or microcomputers, and the cloud servers may be located at another location or locations. The multiple microcontrollers, microcomputers, or cloud servers may communicate there between using one or more communication protocols (e.g., Ethernet, RS-485, Wi-Fi, digital subscriber line (DSL)), various cellular protocols, and data transfer protocols (e.g., TCP-IP, IPX/SPX, DECnet, IPsec/IP, or UDP/IP).

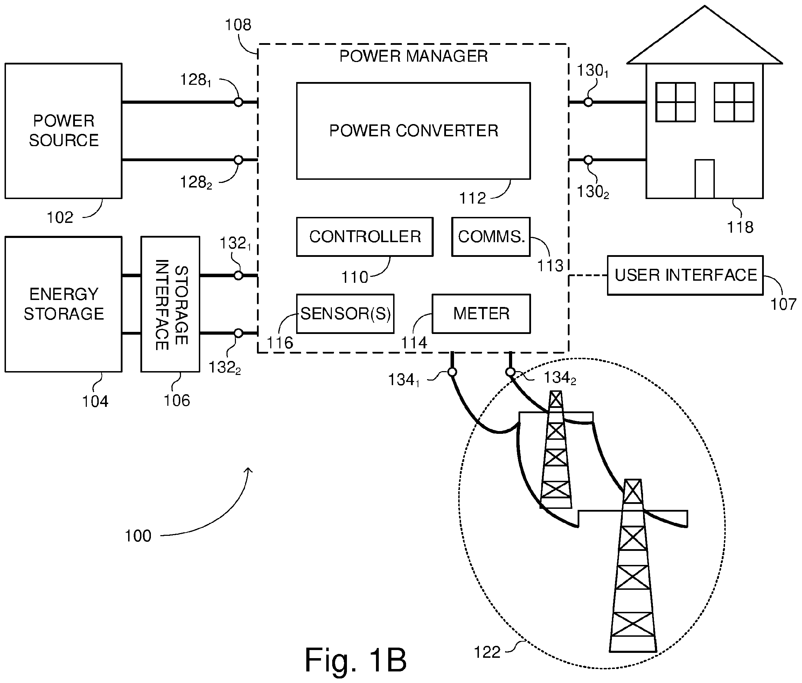

Communications 113 (also referred to as a "communicator") may be configured to transmit or receive information, and may employ one or more communications protocols (e.g., Ethernet, RS-485, Wi-Fi, DSL, Bluetooth, Zigbee, or various cellular protocols), and may further employ one or more data transfer protocols (e.g., TCP-IP, IPX/SPX, DECnet, IPsec/IP, or UDP/IP). For example, communications 113 may be configured to transmit signals to user interface 107, or to receive signals from user interface 107 (e.g., in case user interface 107 is a tablet computer or a cellphone). Communications 113 may be configured to transmit signals to computers or servers connected to the internet, or to receive signals from computers or servers connected to the internet. For example, communications 113 may communicate (e.g., transmit or receive signals) with a power services company to which system 100 is connected (e.g., in case power grid 120 is a utility grid 122 - Figure 1B).

Sensor(s) 116 may be one or more voltage sensors, one or more current sensors, one or more temperature sensors, one or more humidity sensors, and/or one or more specific gravity sensors. The one or more voltage sensor may be configured to measure a voltage at corresponding one or more terminals $128_1$, $128_2$, $130_1$, $130_2$, $132_1$, $132_2$, $134_1$ or $134_2$ of power manager 108. For example, the one or more voltage sensors may measure a corresponding voltage of power source 102, storage interface 106, power grid 120, or load 118. The one or more voltage sensors may comprise a resistive or capacitive divider, a resistive or capacitive bridge, comparators (e.g., employing operational amplifiers), or the like. The one or more current sensors may be configured to measure a current through corresponding one or more terminals $128_1$, $128_2$, $130_1$, $130_2$, $132_1$, $132_2$, $134_1$ or $134_2$ of power manager 108. For example, the one or more current sensors may measure a corresponding current flowing through power source 102, storage interface 106, power grid 120, or load 118. The one or more current sensors may comprise a current transformer ("CT") sensor, Hall effect sensor, zero flux sensor, or the like. The one or more temperature sensors may be configured to measure the temperature of at least one of power storage 104, power manager 108, various components thereof, or an ambient temperature.

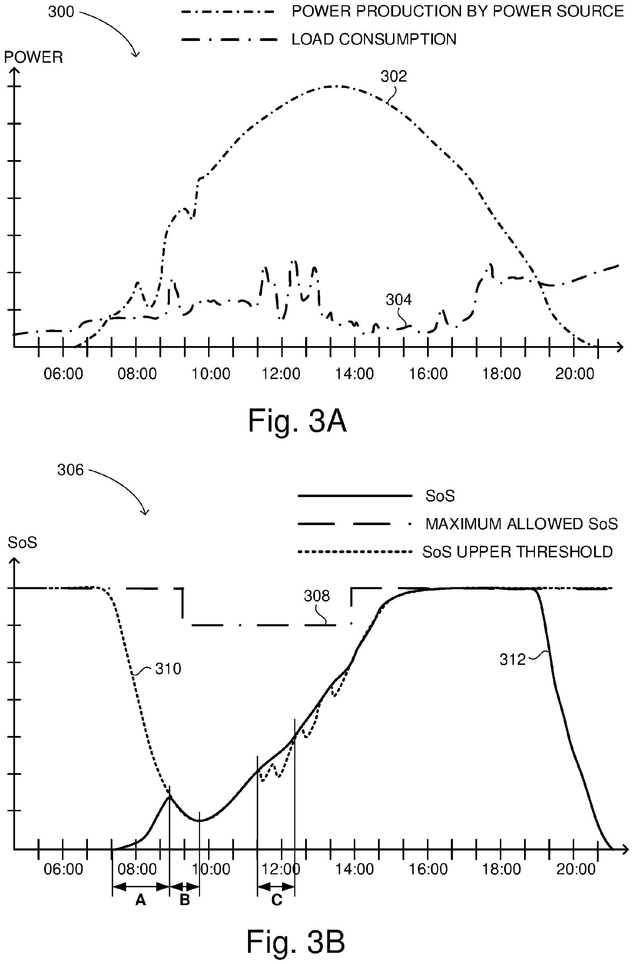

According to the disclosure, storage interface 106 may comprise a switch, and be configured to connect energy storage 104 to power manager 108 or disconnect energy storage 104 from power manager 108. For example, controller 110 may control such a switch. Storage interface 106 may comprise a bidirectional converter configured to convert power from energy storage 104 to power ratings (e.g., voltage, current, frequency, or harmonic distortion) drawn by power converter 112, or to convert power from power converter 112, or power source 102, to power ratings stored in energy storage 104. Controller 110 may be configured to control storage interface 106 to charge or discharge energy storage 104 as further explained below in conjunction with Figures 3A-3B, 4A-4D, 5, 6, 7A-7D, 8A-8B and 9. In Figures 1A-1D, storage interface 106 is depicted as being separate from power manger 108. According to the disclosure, storage interface 106 may be integrated with power manager 108.

User interface 107 may be configured to receive information from a user and to provide information to a user. For example, user interface 107 may be a computer with a screen, keyboard, and mouse. User interface 107 may be a touchscreen attached to power manager 108. User interface may be a screen and buttons connected to power manager 108. User interface may be a tablet computer or a cellphone executing an application, and which may communicate with power manager 108 (e.g., via communications 113).

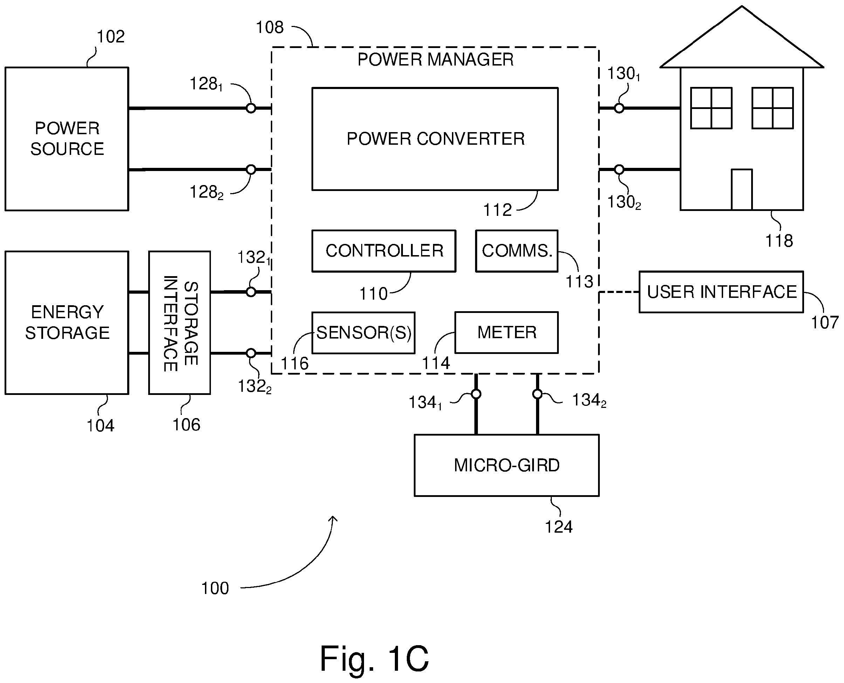

Power source 102 may be configured to generate power (e.g. DC power from PV panels, or generate AC power from wind turbines). Power converter 112 may be configured to convert the power generated by power source 102, power from energy storage 104, or power from power grid 120, to power at ratings (e.g., voltage, current, frequency, or harmonic distortion) compatible or suitable for consumption by load 118. For example, power converter 112 may be a power inverter configured to generate AC power (e.g., 230 volts at 50 Hz, 120 volts at 60 Hz) for load 118. Power converter 112 may provide power either to load 118, to power grid 120, or both. If power converter 112 employs power from power grid 120, power converter 112 may be said to "import" power from power grid 120. If power converter 112 provides power to power grid 120, power converter 112 may be said to "export" power to power grid 120. Power system 100 may have a limit on the power that power converter 112 is able to export to power grid 120, referred to herein as "export limit." For example, an export limit may be imposed by the power services company which owns or operates utility grid 122 (Figure 1B). The export limit may be constant or time dependent. An export limit may be a limit of the power which may be provided to micro-grid 124 (Figure 1C). For example, the export limit may be set via user interface 107, or communications 113 may receive a signal relating to the export limit from the power services company. Meter 114 may be configured to monitor the imported/exported power from or to power grid 120 (e.g., meter 114 may be a bidirectional meter). Power manger 108 may be configured to prevent power converter 112 to export power to power grid 120 if the export limit is reached (e.g., controller 110 may be configured to control a switch disconnecting power grid 120 from power manager 108). Power converter 112 may be a bidirectional converter, and may be configured to convert power from power grid 120 to power used for charging energy storage 104 (e.g., by storage interface 106). Power system 100 may have a limit on the power that power converter 112 is able to import from power grid 120, referred to herein as "import limit."

Storage interface 106 may be configured to charge or discharge energy storage 104. For example, storage interface 106 may be configured to convert power from energy storage 104 to power ratings (e.g., voltage, current, frequency, or harmonic distortion) used by inverter 112 based on various conditions or parameters of power system 100, using various charging and discharging schemes. For example, controller 110 may be configured to control storage interface 106 to charge or discharge energy storage 104 based on state-of-storage (SoS) of the energy storage 104. For example, SoS may be the state of energy (SOE) of energy storage 104, or the state of charge (SOC) of energy storage 104. Controller 110 may be configured to control storage interface 106 to charge or discharge energy storage 104 based on power produced by power source 102. Controller 110 may be configured to control storage interface 106 to charge or discharge energy storage 104 based on the power drawn by load 118. Controller 110 may be configured to charge or discharge energy storage 104 based on a grid limit. A grid limit is further explained below. Charging and discharging of energy storage 102, as well as various parameters and conditions according to which controller 110 may charge or discharge energy storage 104 are further elaborated below in conjunction with Figures 3A-3B, 4A-4D, 5, 6, 7A-7D, 8A-8B and 9.

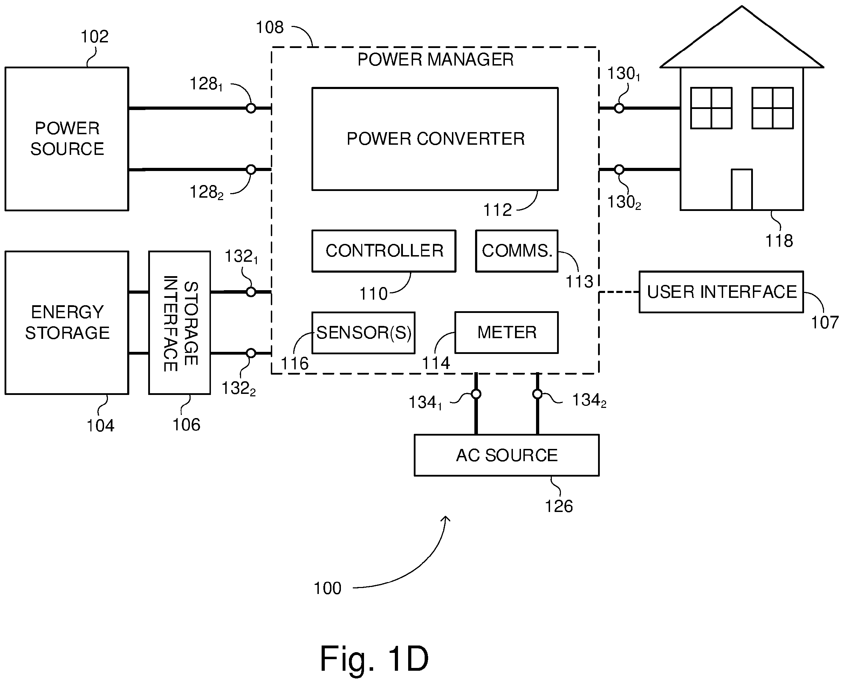

In the disclosure herein, as shown in Figure 1B, power grid 120 may be a utility grid 122. In the disclosure herein, as shown in Figure 1C, power grid 120 may be a micro-grid 124. In the disclosure herein, as shown in Figure 1D, power grid 120 may be an AC source 126 (e.g., a generator using fossil fuels such as diesel, a generator using wind turbines, a generator using hydropower). In case power grid 120 is an AC source (e.g., AC source 126), power may not be exported to power grid 120. In the example of Figure 1C, load 118 may be a cooling system of a cooling truck, and AC source 126 may employ the power from the engine of the truck to generate AC power (e.g., an alternator).

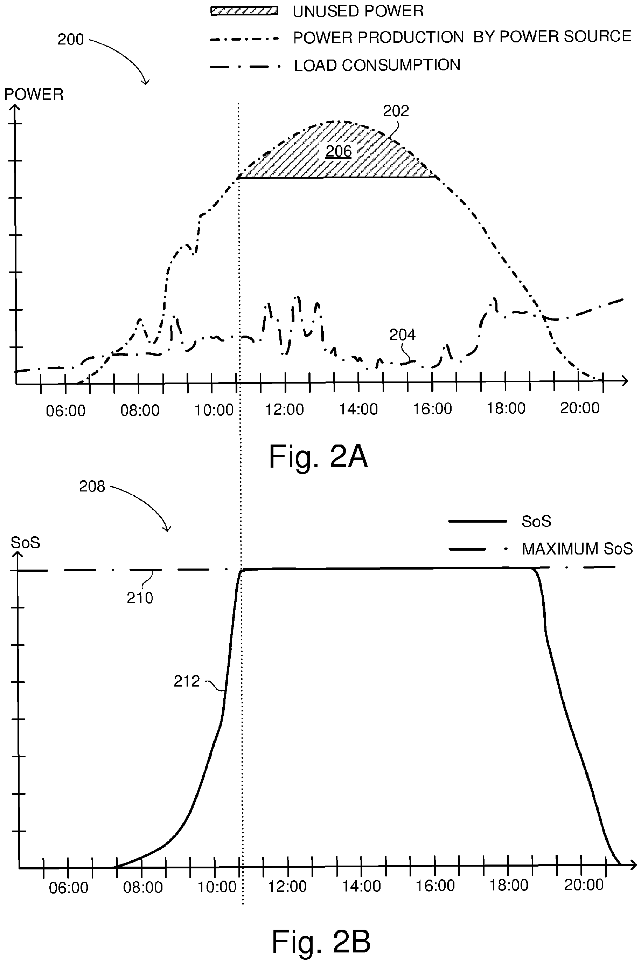

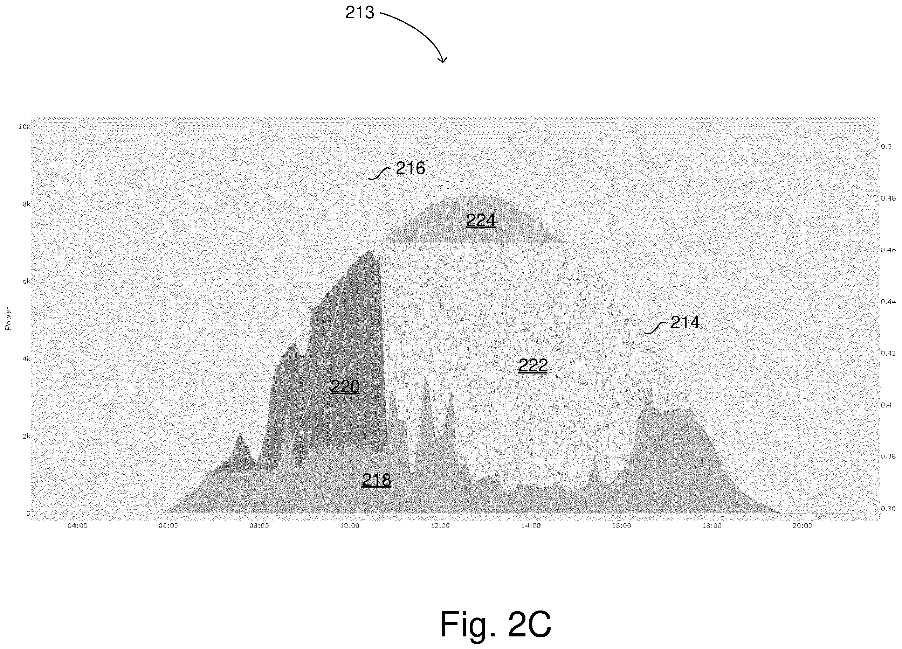

Figures 2A, 2B and 2C show examples of diagrams 200, 208 and 213 respectively, and illustrate charging and discharging of an energy storage (e.g., energy storage 104 of Figures 1A-1D) over a time period (e.g., between 04:40 in the morning, and 20:40 in the evening) according to the disclosure. In Figure 2A, densely-dashed-dotted line 202 represents power generated by a power source (e.g., power source 102 of Figures 1A-1D). Dash-dotted line 204 of Fig. 2A represents power drawn by a load (e.g., load 118 of Figures 1A-1D). In Figure 2B, Double-long-dashed-dotted line 210 represents a maximum allowed SoS of energy storage (e.g., energy storage 104 of Figures 1A-1D). The maximum allowed SoS may be the maximum capacity (e.g., maximum energy capacity, or maximum charge capacity) of the energy storage. The maximum allowed SoS may be a determined (e.g., predetermined) fraction (e.g., 99%, 95%, 90%, 85%) of the maximum capacity of the energy storage. Solid line 212 represents the SoS of the energy storage over the time period.

According to the charging scheme depicted in Figures 2A and 2B, power produced by the power source and not used by load 118 is used to charge the energy storage. until the SoS of the energy storage reaches the maximum allowed SoS 210. In the example depicted in Figures 2A-2B, the energy storage may be charged (e.g., controller 110 may control charge interface 106 to charge storage 104), if the power generated by the power source is higher than the power drawn by the load. In the examples shown in Figures 2A-2B, the power source starts generating power at about 06:15 in the morning. At about 07:15 in the morning, the power source generates more power than the power consumed by the load and the energy storage begins to charge. At about 11:00, SoS 210 of the energy storage reaches the maximum allowed SoS 210. Between 11:00 and 16:00, some of the power produced by the power source is dissipated without use (e.g., unused due to an export limit), as indicated by hatched area 206. The energy storage may be discharged (e.g., controller 110 may control charge interface 106 to discharge storage 104), if the power generated by the power source is lower than the power drawn by load 118. In the examples shown in Figures 2A-2B, at about 19:00 the power generated by the power source decreases below the level of the power drawn by the load, and thereby, the energy storage discharges. Figure 2C depicts an example of experimental results of charging and discharging an energy storage based on the technique described in conjunction with Figures 2A and 2B. In Figure 2C, curve 214 represents the power generated by the power source (e.g., by a photovoltaic array), curve 216 represents a state of energy of energy storage, area 218 represents the power consumed by the load, area 220 represents the power charging the battery, area 222 represents the exported power (e.g., to power grid 120, utility grid 122), and area 224 represents dissipated power.

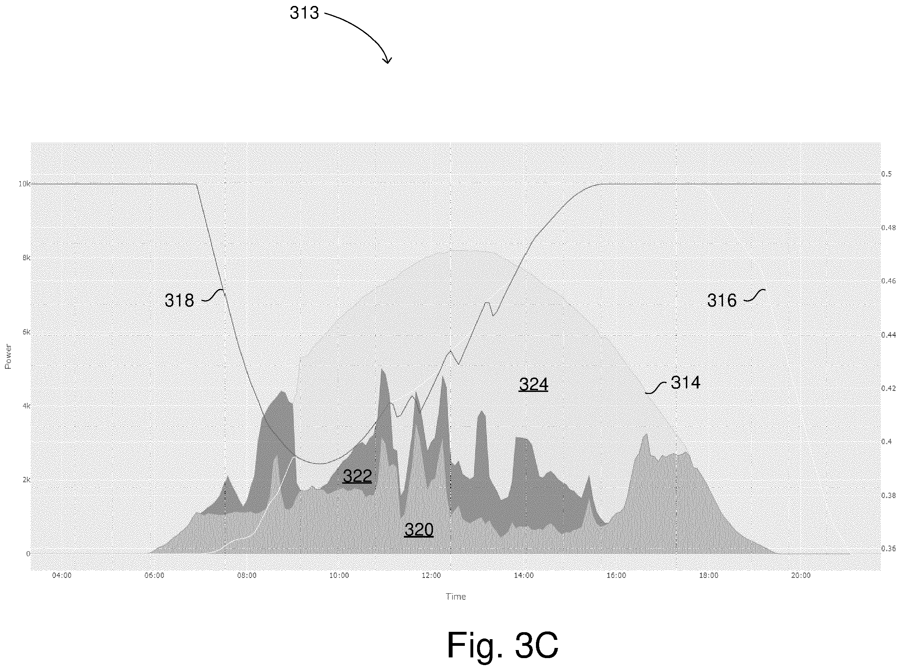

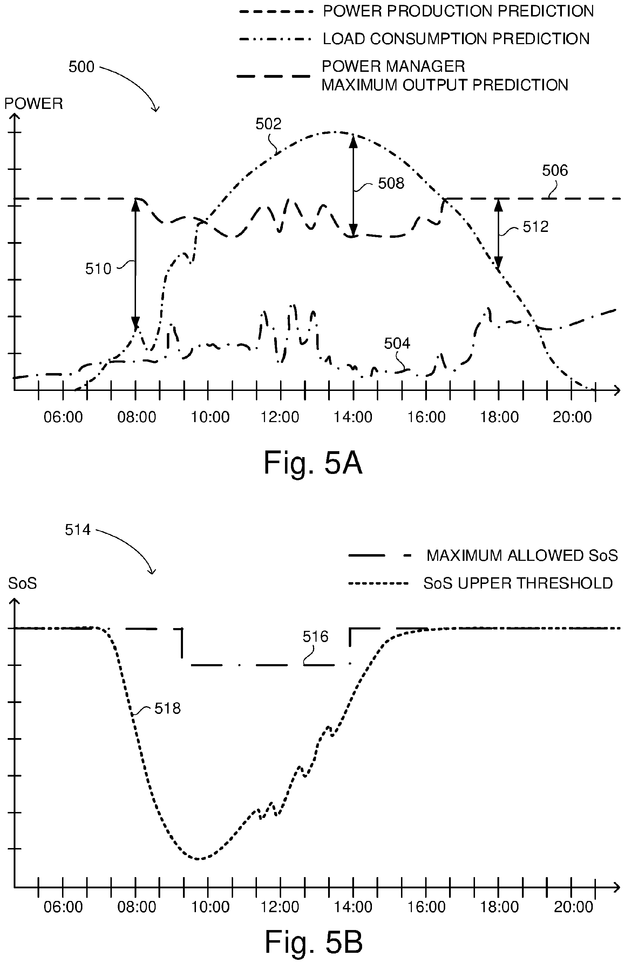

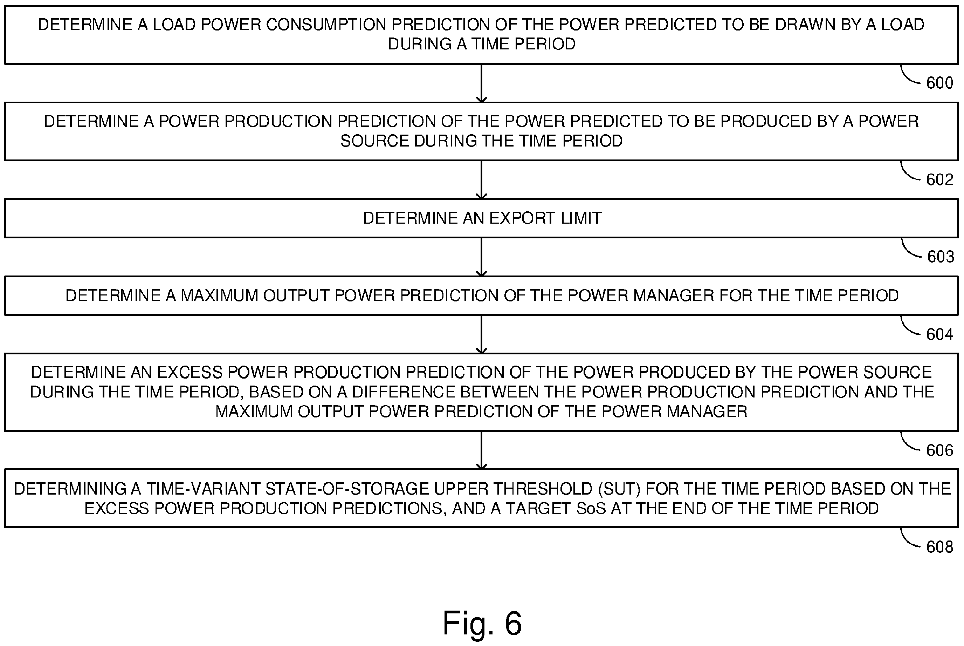

As mentioned above, according to some aspects of the disclosure, the energy storage may be charged or discharged based on a time-variant state-of-storage upper threshold (SUT). Figures 3A, 3B and 3C show an example of diagrams 300, 306 and 313 respectively, depicting charging and discharging of energy storage 104 (Figure 1) over a time period (e.g., between 04:40 in the morning, and 20:40 in the evening) based on an SUT according to the disclosure. The SUT may be determined for a determined time period (e.g., 12 hours, 24 hours, 48 hours), and may relate to a time varying threshold used for determining when to charge or discharge the energy storage. Employing an SUT may reduce the probability that power produced by the power source may be dissipated and not be used. In Figures 3A-3B, densely-dashed-dotted line 302 represents power generated by a power source (e.g., power source 102 of Figures 1A-1D) and may be similar to the generated power illustrated by line 202 in Fig. 2A. Dash-dotted line 304 represents power drawn by a load (e.g., load 118 of Figures 1A-1D) and may be similar to the drawn power illustrated by line 204 in Fig. 2A. Double-long-dashed-dotted line 308 represents a maximum allowed SoS of energy storage (e.g., energy storage 104 of Figures 1A-1D). As shown in the example of Figure 3B, the maximum allowed SoS may vary (e.g., in real time, in a predetermined w) at different periods of the day. Dotted line 310 represents the SUT, and solid line 312 represents the SoS of the energy storage. The determination of SUT 310 is further elaborated below in conjunction with Figures 5A-5B and 6.

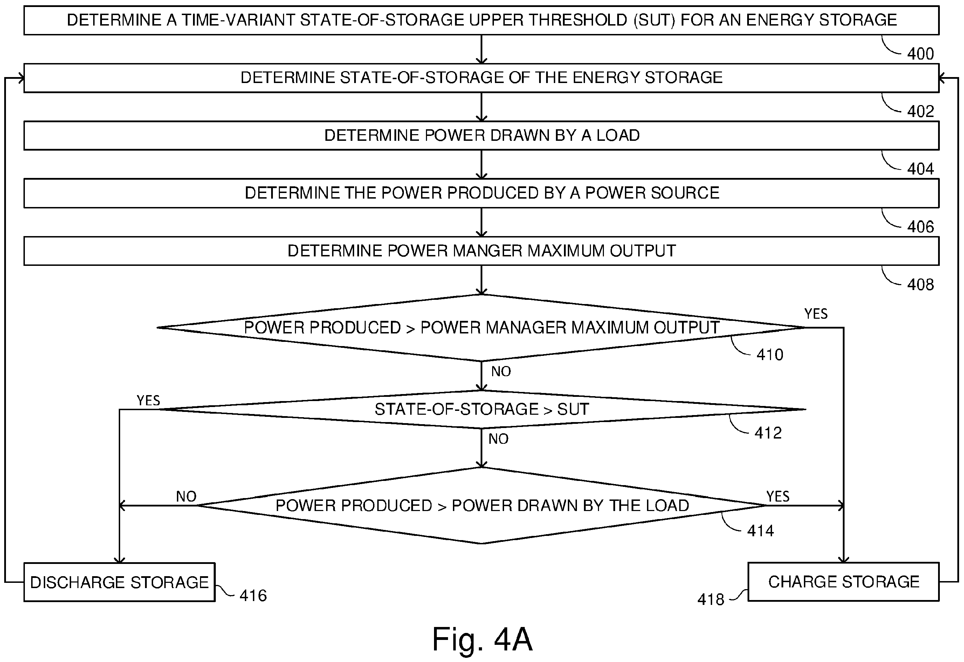

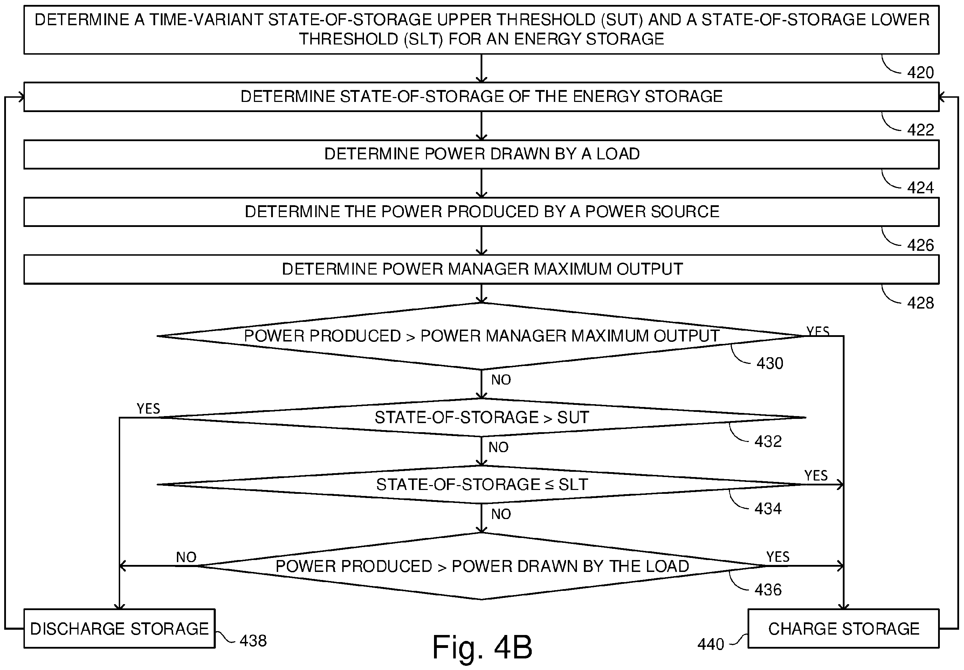

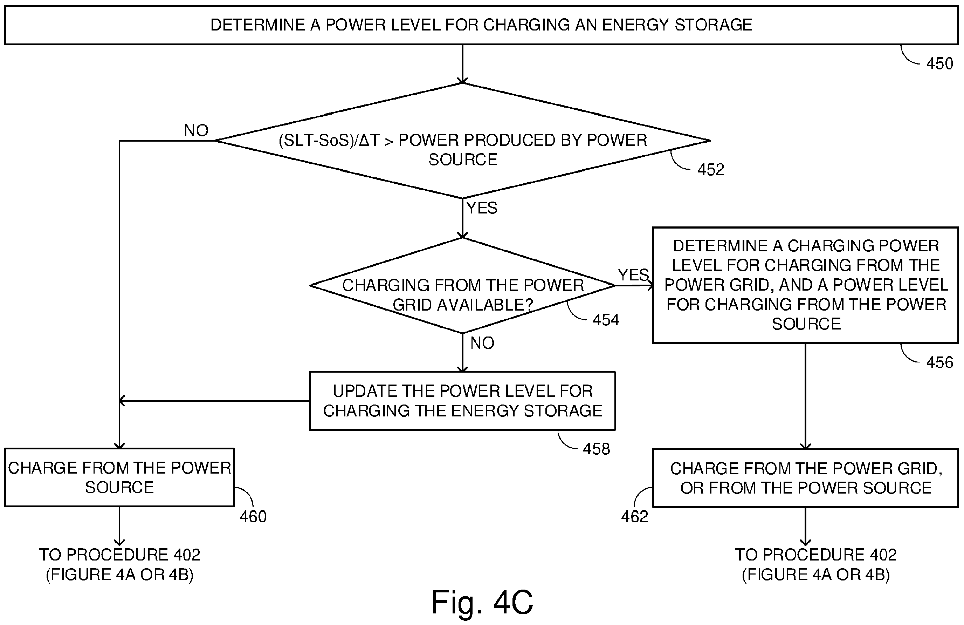

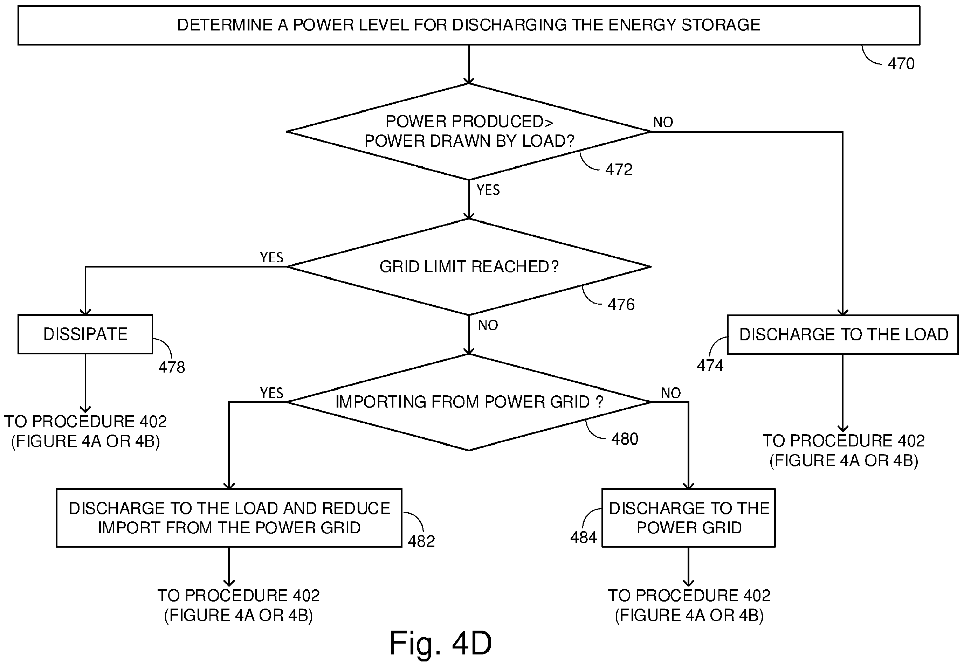

In the examples shown in Figures 3A-3B, the power source starts generating power at about 06:15 in the morning. At about 07:20 in the morning, the power source generates more power than the power consumed by the load and the energy storage begins to charge (e.g., controller 110 controls storage interface 106 to charge energy storage 104). Between about 07:20 and about 09:15 (e.g., time period "A" in Figure 3B), SoS 312 of energy storage may be below SUT 310. At 09:15, the SoS of the energy storage reaches SUT 310. Thus, SoS 312 of energy storage may follow SoS SUT 310. Between 09:15 and 09:50 (e.g., time period "B" in Figure 3B), SUT 310 decreases. Therefore, the energy storage may discharge (e.g., controller 110 controls storage interface 106 to discharge energy storage 104) to remain at or below SUT 310 between 09:15 and 09:50. From 09:50, SUT 310 may increase, and the energy storage may charge (e.g., controller 110 controls storage interface 106 to charge energy storage 104). Between 11:20 and 12:15 (time period "C" in Figure 3B), the energy storage may charge even though SoS 312 of the storage exceeds SUT 310. From about 19:00, the power source may not produce sufficient power for the load (e.g., the power produced by the power source is lower the amount of power drawn by the load) and the storage may discharge to provide the power difference between the consumption and the power generation. The charging and discharging of the energy storage based on an SUT (e.g., SUT 310) may be further explained below in conjunction with Figure 4. As can be seen in Figures 3A-3B, the energy storage may reach the maximum allowed SoS at about 16:00 without any power of the power source being dissipated without use. Figure 3C depicts an example of experimental results of charging and discharging an energy storage (e.g., energy storage 104) based on the technique described in conjunction with Figures 3A and 3B and further elaborated below. Comparing Figure 3C with Figure 2C, the battery charging may be distributed over a longer period of the day. In Figure 3C, curve 314 may represent the power generated by the power source (e.g., by a photovoltaic array), curve 316 may represent a state of energy of the energy storage, curve 318 may represent the SUT, area 320 may represent the power consumed by the load, area 322 may represent the power charging energy storage 104, and area 324 may represent the power exported (e.g., to utility grid 122). Comparing Figure 3C to Figure 2C, due to the charging and discharging based on a time-variant state-of-storage upper threshold, no power may be dissipated in the example shown in Figure 3C.

Figures 4A-4D, show examples of methods for charging and discharging an energy storage based on an SUT (Figure 4A), or based on an SUT and an SLT (Figure 4B), according to the disclosure. Referring to Figure 4A, in step 400, an SUT may be determined. For example, the SUT may be determined for a time period (e.g., 12 hours, 24 hours, or 48 hours). For example, with reference to Figures 1A-1D, controller 110 may determine an SUT. The SUT represents a threshold according to which controller 110 may direct storage interface 106 to charge or discharge energy storage 104. The determination of SUT is further elaborated below in conjunction with Figures 5A-5B and 6.

In step 402, a controller (e.g., controller 110 - Figures 1A-1D) may determine the SoS (e.g., SOE, or SOC) of the energy storage. The controller may determine the SoS based on the SOE of the energy storage. The controller may determine the SoS based on the SOC of the energy storage. With reference to Figures 1A-1D, controller 110 determines the SoS of energy storage 104. For example, controller 110 may employ measurements from sensor(s) 116 to determine the SoS. For example, controller 110 may employ voltage measurements (e.g., from sensors measuring the voltage across storage terminals $132_1$ and $132_2$), current measurements (e.g., from sensors measuring the current through storage terminals $132_1$ or $132_2$), temperature measurements of temperature sensors, specific gravity measurements of specific gravity sensors, humidity measurements of humidity sensors, or any combination of measurements thereof to determine the SoS of energy storage 104.

In step 404, the controller may determine the power drawn by the load. With reference to Figures 1A-1D, controller 110 determines the power drawn by load 118. For example, controller 110 may receive measurements from sensor(s) 116 to determine the power drawn by load 118. For example, controller 110 may employ voltage measurements (e.g., of voltage sensors measuring the voltage across storage terminals $130_1$ and $130_2$), or current measurements (e.g., of current sensors measuring the current through storage terminals $130_1$ or $130_2$), or both to determine the power drawn by load 118.

In step 406, the controller may determine the power produced by the power source. For example, the produced power by the power source may be determined based on a measurement or measurements (e.g., from sensor(s) 116 - Figures 1A-1D), an algorithm (e.g., maximum power point tracking (MPPT), signals received from the power source (e.g., signals received by communications 113 from power source 102 - Figures 1A-1D), etc. With reference to Figures 1A-1D, controller 110 may determine the power produced by the power source (e.g., based on measurements from sensor(s) 116, or based on signals received by communications 113 from power source 102, or both).

In step 408, the controller may determine a power manager maximum output (e.g., power manager MAX OUT). Power manager MAX_OUT may define the maximum possible output power of a power manager (e.g., at a given time). For example, with reference to Figures 1A-1D, controller 110 may determine a power manager MAX OUT of power manager 108 based on one or more of: a power limit of power converter 112, the power drawn by load 118, and a limit of power grid 120 (e.g., power limit set by the power distribution network). A power limit of power converter 112 may be the converter ratings or a power limit on the output power of power converter 112 (e.g., derated output power of the power converter 112 due to temperature). For example, the limit of power grid 120 may be defined as the sum of the power drawn by load 118 from grid 120, and an export limit to power grid 120 as follows:

$$\text{grid limit} = \text{power imported from grid} + \text{the export limit} \qquad (1)$$

A power manager_MAX_OUT may be determined based on a minimum between the power rating of power converter 112, and the sum of the power drawn by load 118 and the grid limit, as follows:

$$\text{power manager\_MAX\_OUT} = \min\{\text{converter power limit},$$

$$(\text{power drawn by load} + \text{grid limit})\} \quad (2)$$

In step 410, the controller may determine the level of the power produced by a power source (e.g., power source 102) relative to the power manager maximum output (power manager MAX OUT) (e.g., by comparing the level of the power produced by a power source with the level of the power manager MAX_OUT). If the power produced by a power source is higher than the power manager MAX_OUT, the method may proceed to step 418 (e.g., charge storage). With reference to Figures 1A-1D, controller 110 may determine (e.g., by comparing) the level of the power produced by a power source (e.g., power source 102) relative to the level of the power manager MAX_OUT. For example, with reference to Figures 1A-1D, and 3B, during time period "C," the power produced by power source 102 may be higher than the power manager MAX_OUT. Thus, controller 110 may direct storage interface 106 to charger energy storage 104 (e.g., the excess energy is used to charge energy storage 104 and more power is harvested from power source 102, instead of being dissipated or not used). If the power produced by power source 102 is lower than the power manager MAX_OUT, the method may proceed to step 412.

In step 412, the controller may determine the level of the SoS of the energy storage, relative to the SUT (e.g., by comparing the level of the SoS of the energy storage with the SUT). If the SoS of the energy storage is lower than the SUT, the method may proceed to step 414 (e.g., to charge the energy storage). If the SoS of the energy storage is higher than the SUT, the method may proceed to step 416 (e.g., discharge storage). With reference to Figures 1A-1D, controller 110 may determine (e.g., by comparing) the level of the SoS of the energy storage 104, relative to the SUT. For example, with reference to Figures 1A-1D, and 3B, during time period "B," if the SoS of energy storage 104 is higher than the SUT, controller 110 may direct storage interface 104 to discharge energy storage 104. During time period "B," if the SoS of energy storage 104 is lower than the SUT, controller 110 may direct storage interface 104 to charge energy storage 104. The SUT may comprise (e.g., for each time instance) a determined value above the SUT and a determined value below the SUT (e.g., a determined hysteresis). The determined value may be predetermined or determined based on an (e.g., real-time, data-based) analysis. For example, in case the SUT includes a determined value above the SUT (e.g., SUT+5, SUT+10, SUT+100), the energy storage may be discharged if the SoS exceeds the determined value above the SUT. In case the SUT includes a determined value below the SUT (e.g., SUT-5, SUT-10, SUT-100), the energy storage may be charged if the SoS falls below the determined value below the SUT.

In step 414, the controller may determine the level of the power produced by the power source relative to the power drawn by the load (e.g., by comparing the level of the power produced by the power source with the power drawn by the load). If the power produced by the power source is higher than the power drawn by the load, the method may proceed to step 418 (charge storage). With reference to Figures 1A-1D, controller 110 may determine (e.g., by comparing) the level of the power produced by the power source relative to the power drawn by the load. For example, with reference to Figures 1A-1D, and 3B, during time period "A" of Figure 3B, the power produced by the power source 102 is higher than the power drawn by load 118 and the SoS of energy storage 104 is below the SUT. If the power produced by the power source is lower than the power drawn by the load, the method may proceed to step 416 (e.g., discharge storage). For example, with reference to Figure 3B, after about 18:00, the power produced by power source 102 may be lower than the power drawn by load 118.

In step 416, the controller may control a storage interface to discharge the energy storage. With reference to Figures 1A-1D, controller 110 controls storage interface 106 to discharge energy storage 104.

In step 418, the controller may control a storage interface to charge the energy storage. With reference to Figures 1A-1D, controller 110 controls storage interface 106 to charge energy storage 104.

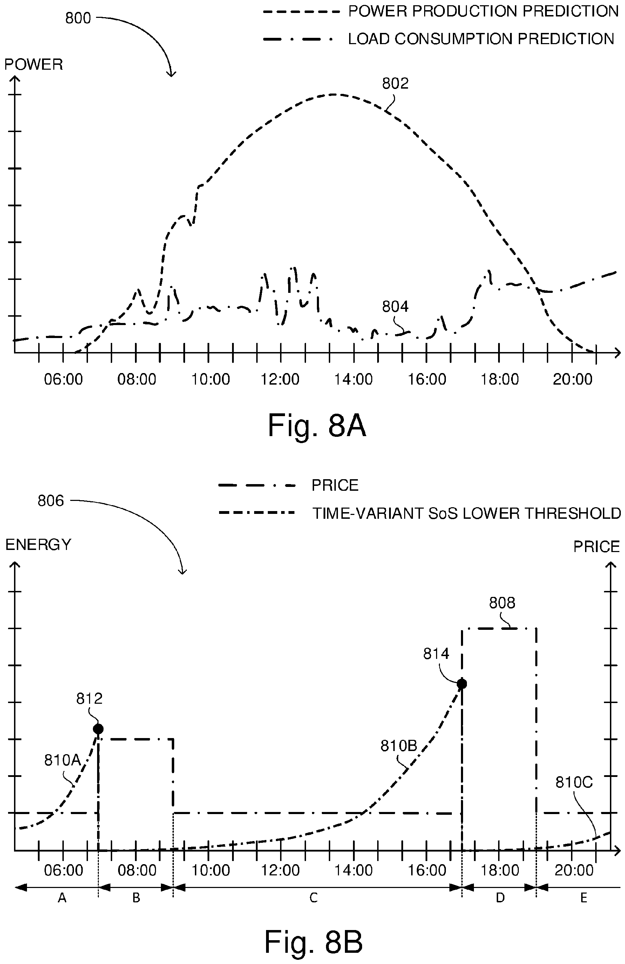

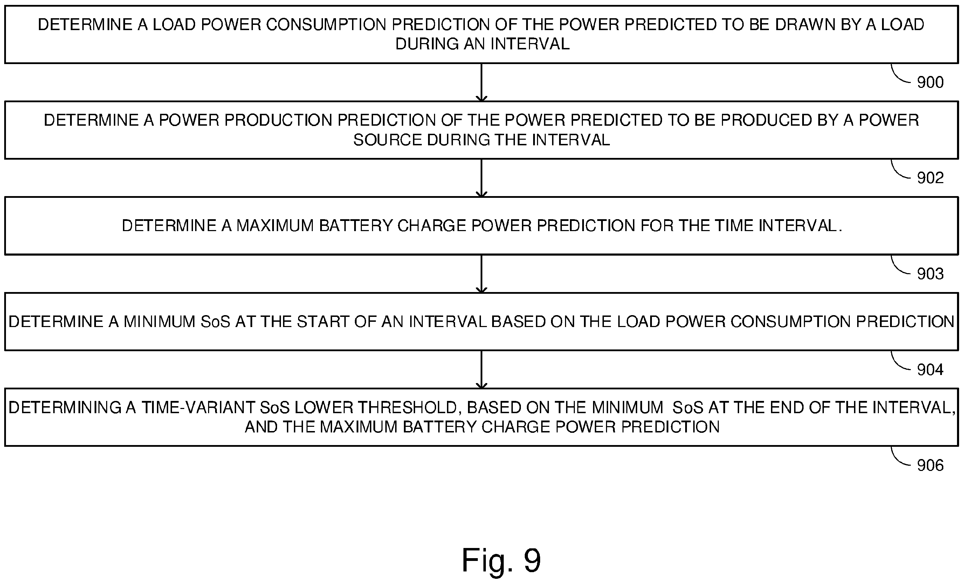

According to some aspects of the disclosure, an energy storage (e.g., energy storage 104, Figures 1A-1D) may be charged or discharged based on a determined SoS lower threshold (SLT - In addition to using an SUT such as SUT 310 of Figure 3A). The SLT may be a determined (e.g., predetermined) fraction (e.g., 0%, 10%, or 15%) of the maximum capacity of energy storage 104, or a determined energy value (e.g., 0 Joules, 1 KWh). For example, the SLT may be determined based on a determined (e.g., required) backup reserve. The SLT may be determined for a time period. The SLT may be a time-variant SLT (TVSLT). Time-variant SLT is further elaborated below in conjunction with Figures 8A, 8B and 9.

Referring to Figure 4B, the described method may relate to charging and/or discharging based on a SoS lower threshold (SLT). In step 420, an SUT and an SLT may be determined. For example, the SUT and the SLT are determined for a time period (e.g., 12 hours, 24 hours, 48 hours). The SLT may be a determined (e.g., predetermined) fraction (e.g., 0%, 10%, or 15%) of the maximum capacity of energy storage 104, or a determined energy value (e.g., 0 Joules, 100 Ah, 1 KWh). For example, the SLT may be determined based on a determined (e.g., required) backup reserve. The SLT may be determined for a time period. The SLT may be a time-variant SLT (TVSLT). The determination of SUT is further elaborated below in conjunction with Figures 5A-5B, 6, and 10A-10C. The determination of a Time-variant SLT is further elaborated below in conjunction with Figures 8A, 8B and 9. For example, with reference to Figures 1A-1D, controller 110 may determine the SUT and the SLT. The SLT may be a time-variant SLT. The SLT may represent a threshold.

In step 422, a controller (e.g., controller 110 - Figures 1A-1D) may determine the SoS (e.g., SOE, or SOC) of the energy storage. The SoS may be determined based on the SOE of the energy storage. The SoS may be determined based on the SOC of the energy storage. With reference to Figures 1A-1D, controller 110 determines the SoS of energy storage 104. For example, controller 110 may employ measurements from sensor(s) 116 to determine the SoS (e.g., similar to as described above in conjunction with step 402 - Figure 4A).

In step 424, the controller may determine the power drawn by the load. With reference to Figures 1A-1D, controller 110 may determine the power drawn by load 118 (e.g., similar to as described above in conjunction with step 404 - Figure 4A).

In step 426, the controller may determine the power produced by the power source. The determination may be based on a measurement or measurements (e.g., from sensor(s) 116 - Figures 1A-1D), an algorithm (e.g., Maximum power point tracking (MPPT), signals received from the power source (e.g., signals received by communications 113 from power source 102 - Figures 1A-1D), etc. With reference to Figures 1A-1D, controller 110 determines the power produced by the power source (e.g., based on measurements from sensor(s) 116, or based on signals received by communications 113 from power source 102, or both).

In step 428, the controller may determine the power manager maximum output (power manager MAX OUT). Power manager MAX_OUT may be determined as described above in conjunction with step 408 (Figure 4A). For example, with reference to Figures 1A-1D, controller 110 may determine a power manager MAX_OUT of power manager 108 based on one or more of: the power ratings of power converter 112, the power drawn by load 118, and a limit of power grid 120 (e.g., as described above in conjunction with step 408 - Figure 4A).

In step 430, the controller may determine the level of the power produced by a power source relative to the power manager MAX_OUT (e.g., by comparing the level of the power produced by a power source with the power manager MAX OUT). If the power produced by the power source is higher than the power manager MAX_OUT, the method may proceed to step 440 (charge storage). If the power produced by the power source is lower than the power manager MAX OUT, the method may proceed to step 432. With reference to Figures 1A-1D, controller 110 may determine (e.g., by comparing) the level of the power produced by a power source (e.g., power source 102) relative to the power manager MAX_OUT. For example, with reference to Figures 1A-1D, and 3B, during time period "C," the power produced by power source 102 may be higher than the power manager MAX OUT.

In step 432, the controller may determine the level of the SoS of the energy storage relative to the SUT (e.g., by comparing the level of the SoS of the energy storage with the SUT). If the SoS of the energy storage is higher than the SUT, the method may proceed to step 438 (discharge storage). If the SoS of the energy storage is lower than the SUT, the method may proceed to step 434. With reference to Figures 1A-1D, controller 110 may determine (e.g., by comparing) the level of the SoS of the energy storage 104 relative to the SUT. For example, with reference to Figures 1A-1D, and 3B, during time period "B", if the SoS of the energy storage 104 is higher than the SUT, the energy storage 104 is discharged. The SUT may comprise a determined value above the SUT and a determined value below the SUT at a time instance (e.g., a determine hysteresis, similar to as describe above in conjunction with step 412 - Figure 4A).

In step 434, the controller may determine the level of the SoS of the energy storage relative to the SLT (e.g., by comparing the level of the SoS of the energy storage with the SLT). If the SoS of the energy storage is lower than the SLT, the method may proceed to step 440 (charge storage). If the SoS of the energy storage is higher than the SLT, the method may proceed to step 436. The SLT may comprise (e.g., for each time instance) a determined value above the SUT and a determined value below the SUT (e.g., a determined hysteresis). With reference to Figures 1A-1D, controller 110 determines (e.g., by comparing) the level of the SoS of the energy relative to the SLT.

In step 436, the controller may determine the level of the power produced by the power source relative to the power drawn by the load (e.g., by comparing the level of the power produced by the power source with the power drawn by the load). If the power produced by the power source is higher than the power drawn by the load, the method may proceed to step 440 (e.g., charge storage). If the power produced by the power source is lower than the power drawn by the load, the method may proceed to step 438 (e.g., discharge storage). For example, with reference to Figures 1A-1D, and 3B, during time period "A," the power produced by the power source 102 may be higher than the power drawn by load 118, and the SoS of energy storage 104 may be below the SUT. For example, with reference to Figures 1A-1D and 3B, after about 18:00, the power produced by power source 102 may be lower than the power drawn by load 118 and energy storage 104 may discharge. With reference to Figures 1A-1D, controller 110 may determine (e.g., by comparing) the level of the power produced by the power source 102 relative to the power drawn by the load 118.

In step 438, the controller may control a storage interface to discharge energy storage. With reference to Figures 1A-1D, controller 110 may control storage interface 106 to discharge energy storage 104.

In step 440, the controller may control a storage interface to charge the energy storage. With reference to Figures 1A-1D, controller 110 may control storage interface 106 to charge energy storage 104.

Reference is now made to Figures 4C, which shows and example of a method according to which energy storage may be charged (e.g., step 418 in Figure 4A, or step 440 in Figure 4B). In step 450, a controller (e.g., controller 110 - Figures 1A-1d) may determine a power level (e.g., 1W, 30W, 500W, 1kW, 10kW) for charging an energy storage (e.g., energy storage 104 - Figures 1A-1D). The power level for charging the energy storage may be based on various parameters related to the power system. For example, with reference to Figures 1A-1D, a power level for charging energy storage 104 may be based on some or all of power produced by power source 102, power drawn by load 118, the SoS of energy storage 104, maximum output power of power manager 108, the SLT, a maximum charge rate of energy storage 104 (e.g., the rated maximum charging power of energy storage 104, or of storage interface 106), or the available energy storage space in energy storage 104. For example, the power level for charging energy storage 104 (denoted 'actual charge rate') may be determined as follows:

$$\text{charge rate} = \max\{(\text{power produced} - \text{power drawn}),$$

$$(\text{power produced} - \text{power manager MAX\_OUT}), [(\text{SLT-SoS})/\Delta T]\}$$

$$(3)$$

and

$$\text{actual charge rate} = \min\{\text{charge rate, maximum charge rate,}$$

$$(\text{available energy storage space}/\Delta T)\} \qquad (4)$$

where $\Delta T$ is a time differential (e.g., based on an interval between measurements, a sampling period and the like). $1/\Delta T$ is brought herein only as an example of an energy to power conversion factor. Energy may be converted to power employing an energy to power conversion function (e.g., an interpolating function), which may be a linear or a non-linear function. With reference to Figures 1A-1D, controller 110 may determine a power level for charging energy storage 104.

In step 452, the controller may determine a power level for charging the energy storage to the SLT relative to the power produced by the power source (e.g., power source 102). If the power level for charging the energy storage to the SLT is higher than the power produced by the power source, the method may proceed to step 454. If the power level for charging the energy storage to the SLT is lower than the power produced by the power source, the method may proceed to step 460. The power level for charging the energy storage to the SLT may be determined based on an energy differential of a difference between SLT and the SoS of the energy storage and a time interval $\Delta T$ (e.g., the above mention time differential). $\Delta T$ may be a system related time interval such as a time interval between measurements, or a sampling period). With reference to Figure 1A-1D, controller 110 may determine if the power level for charging charge energy storage 104 to the SLT relative to the power produced by power source 102

In step 454, the controller may determine the availability of charging the energy storage from a power grid (e.g., power grid 120 Figures 1A-1D). In case charging from the power grid is available, the method may proceed to step 456.

In case charging from the power grid is not available, the method may proceed to step 458. The availability of charging from the grid may be time dependent. For example, at certain hours of the day charging from the grid may be available, while at other hours charging from the grid may not be unavailable. With reference to Figures 1A-1D, controller 110 may determine if charging from power grid 120 is available.

In step 456, the controller may determine a power level for charging from the power grid, and a power level for charging from the power source (e.g., in case charging from the grid is available). The power level for charging from the power grid may be determined as follows:

$$\text{charging power from grid} = \{[(\text{SLT-SoS})/\Delta T] - \text{power produced by source}\} \quad (5)$$

From step 456, the method may proceed to step 462. With reference to Figures 1A-1D, controller 110 may determine a power level for charging from power grid 120, and a power level for charging from power source 102.

In step 458, the controller may update the power level for charging the energy storage (e.g., determined in step 450) (e.g., in case charging from the grid is not available). For example, the power level for charging the energy storage may be updated as follows:

$$\text{updated charge rate} = \min\{\text{actual charge rate, power produced by source}\} \quad (6)$$

where the "actual charge rate" in the parenthesis is the actual charge rate from step 450. With reference to Figures 1A-1D, controller 110 may update the charging power. The method may proceed to step 460.

In step 460, the controller may control a storage interface to charge the power storage may from the power source based on the determined power level for charging the energy storage (e.g., determined in step 450), or based on the updated power level for charging the energy storage (e.g., determined in step 458). From step 460, the method may proceed to step 402 (Figure 4A or Figure 4B). With reference to Figures 1A-1D, controller 110 may control storage interface 106 to charge storage 104 from power source 102 based on the updated power level for charging energy storage 104.

In step 462, the controller may control a storage interface to charge the power storage from the power source or from the power grid based on the determined power level for charging from the power grid, or based on the determined power level for charging from the power source (e.g., determined in step 456). From step 462, the method may proceed to step 402 (Figure 4A or Figure 4B). With reference to Figures 1A-1D, controller 110 may control storage interface 106 to charge storage 104 from power source 102 or from power grid 120 based on the corresponding determined power level for charging energy storage 104.

Reference is now made to Figure 4D which illustrates an example of a method according to which energy storage may be discharged (e.g., step 416 in Figure 4A, or step 437 in Figure 4B). In step 470, a controller (e.g., controller 110 - Figures 1A-1D) may determine a power level (e.g., 1W, 30W, 500W, 1kW, 10kW) for discharging an energy storage (e.g., energy storage 104 - Figures 1A-1D). The power level for discharging the energy storage may be based on various parameters relating to a power system (e.g., power system 100 - Figures 1A-1D). For example, with reference to Figures 1A-1D, the power level for discharging the energy storage (e.g., denoted 'actual discharge rate') may be based on some or all of the power produced by power source 108, the power drawn by the load 118, the SoS of the energy storage 104, the maximum output of power manager 108, the SUT, or maximum discharge rate of energy storage 104 or of storage interface 106. For example, the power to discharge the energy storage may be determined as follows:

$$\text{discharge rate} = \max\{(\text{power produced - power drawn}), [\text{SoS-SUT})/\Delta T]\} \quad (7)$$

and

$$\text{actual discharge rate} = \min\{\text{discharge rate, maximum discharge rate}, (\text{SoS}/\Delta T),$$

$$(\text{power manager MAX\_OUT - power produced})\} \quad (8)$$

With reference to Figures 1A-1D, controller 110 may determine the level of power available for discharging energy storage 104.

In step 472, the controller may determine a level of the power produced by the power source (e.g., power source 102-Figure 1A-1D) relative to the power drawn by a load (e.g., load 118 - Figures 1A-1D). If the power level produced by the power source is higher than the power level drawn by the load, the method may proceed to step 476. If the power level produced by the power source is lower than the power level drawn by the load, the method may proceed to step 474. With reference to Figures 1A-1D, sensors 116 may sense the power level produced by power source 102 and the power level drawn by load 118, and controller 110 may determine the power level produced by power source 102 relative to the power drawn by load 118.

In step 474, the controller may control a storage interface to discharge power from the energy storage to the load. For example, the energy storage may discharge power to the load based on the determined power level for discharging the energy storage (e.g., determined in step 470). With reference to Figures 1A-1D, controller 110 may control storage interface 106 to discharge storage 104 to load 118.

In step 476, the controller may determine if a grid limit of a power grid (e.g., power grid 120 - Figures 1A-1D) has been reached. In case the limit of the power grid was reached, the method may proceed to step 478. In case the limit of power grid 120 was not reached, the method may proceed to step 480. With reference to Figures 1A-1D, controller 110 may determine if the limit of power grid 120 has been reached based on readings from meter 114.

In step 478, the controller may controller the storage interface to dissipate (e.g., dissipated as heat over a resistor) the power discharged from the energy storage (e.g., determined in step 470).

In step 480, the controller may determine if power is imported from the power grid 120. If power is imported from the power grid 120, the method may proceed to step 482. If power is not imported from power grid 120, the method may proceed to step 484. With reference to Figures 1A-1D, controller 110 may determine if power is imported from power grid 120 based on measurements from meter 114.

In step 482, the controller may control the power storage to discharge to the load 118 and reduce the power imported from the power grid 120. With reference to Figures 1A-1D controller 110 may reduce power imported from power grid 120, and control storage interface 106 to discharge.

In step 484, controller may controller the storage interface to discharge the energy storage 104 and the power is delivered to the power grid 120. With reference to Figures 1A-1D, controller 110 may control storage interface 106 to discharge the energy storage 104 to power grid 120.

As mentioned above, an energy storage (e.g., energy storage 104 Figures 1A-1D) may be charged or discharged based on an SUT. The SUT may be determined based on a prediction of the power produced by a power source (e.g., power source 102) during a time period, a prediction of the power drawn by a load (e.g., load 118 Figures 1A-1D) during the time period, and/or a prediction of the grid limit (herein "grid limit prediction"). A prediction of the power produced by a power source may be referred to herein as "power production prediction," and a prediction of the power drawn by the load may be referred to herein as "load power consumption prediction."

Reference is made to Figures 5A and 5B, which show an example of diagrams 500 and 514 respectively, depicting various time dependent parameters, which may be employed for determining an SUT 518, according to the disclosure. The various time dependent parameters are depicted over a time period (e.g., between 04:40 in the morning, and 20:20 in the evening). Diagram 500 shows a power production prediction 502 of the power that the power source is predicted to produce, a load power consumption prediction 504 of the power the load is predicted to draw, and a prediction of a maximum output power 506 of a power manager (e.g., prediction of power manager MAX_OUT of power manager 112). Diagram 514 shows a maximum allowed SoS 516 of power storage 104, and the determined SUT 518.

Reference is made to Figure 6, which shows an example of a method for determining SUT 518. In step 600, a power production prediction (e.g., power production prediction 502) of power produced by a power source (e.g., power source 102 - Figures 1A-1D) during a time period (e.g., between 04:40 in the morning, and 20:20 in the evening) may be determined. Power production prediction 502 may be determined based on past (e.g., a previous day or an average of previous days) power production (e.g., data, statistics) for a corresponding time period. For example, power production prediction 502 may be determined based on yesterday's actual power production of power source 102 between 04:40 in the morning, and 20:20 in the evening. Power production prediction 502 may be determined based on power production at the pertinent date over past years (e.g., on February 20 over the past 10 years). Power production prediction 502 may be determined based on weather predictions, or irradiance predictions when the power source is based on solar energy. Power production prediction 502 may be determined employing Artificial Intelligence (AI) techniques. Power production prediction 502 may be pre-scaled to allow for prediction errors. For example, if power production prediction 502 is determined based on yesterday's actual power production, yesterday's actual power production may be multiplied by a determined factor (e.g., 1.1, 1.2). Power production prediction 502 may be a continuous function of time, or a discrete function of time. With reference to Figures 1A-1D, controller 110 may determine a power production prediction of the power produced by power source 102.

In step 602, a controller (e.g., controller 110 - Figures 1A-1d) may determine a load power consumption prediction (e.g., load power consumption prediction 504 - Figure 5A) of the power predicted to be drawn by a load (e.g., load 118 - Figures 1A-1D) during a time period (e.g., between 04:40 in the morning, and 20:20 in the evening). The load the power consumption prediction may be determined based on past (e.g., a previous day or days) load power consumption for a corresponding time period. For example, load power consumption prediction 504 may be determined based on yesterday's actual load power consumption between 04:40 in the morning, and 20:20 in the evening. The load power consumption prediction may be determined based on an average of two or more pervious days between 04:40 in the morning, and 20:20 in the evening. Load power consumption prediction 504 may be determined based on load consumption at the pertinent date over past years (e.g., on February 20 over the past 10 years). The load power consumption prediction may be determined based on artificial intelligence (AI) techniques. The load power consumption prediction may be determined based on user input. For example, in case the load (e.g., load 118 - Figures 1A-1D) is a house, the user may schedule the operation of various machines (e.g., motors, presses, refrigeration systems, or the like), or of various appliances (e.g., air-conditioner, water heater, washing machine, refrigerator, dryer, lights, or the like) via a user interface (e.g. user interface 107 - Figures 1A-1D). Such information may be employed to determine the load power consumption prediction. The load power consumption prediction may be pre-scaled to allow for prediction errors. For example, if load the power consumption prediction is determined based on yesterday's actual load power consumption, yesterday's actual load power consumption may be multiplied by a determined factor (e.g., 0.9, or 0.85). The load power consumption prediction may be a continuous function of time, or a discrete function of time. With reference to Figures 1A-1D, controller 110 may determine a load power consumption prediction (e.g., based on past load power consumption). Controller 110 may determine a load power consumption prediction based on user provided information, which may be provided by user interface 107. Controller 110 may determine the load power consumption prediction based on a combination of user provided information and past data.

In step 603, the controller may determine an export limit. The export limit may be a fixed value. The export limit may be a time dependent value. The export limit may change from one day to another. In such cases, the export limit may be a predicted (e.g., estimated) export limit. For example, the export limit may be predicted based on past export limits (e.g., from a previous day or days). The export limit may be predicted employing AI techniques. The export limit may be determined by a power services company and transmitted to a power system such as power system 100. With reference to Figures 1A-1D, controller 110 may determine an export limit. In case the export limit is a predicted export limit, controller 110 may estimate the export limit (e.g., based on past data). In case the export limit (e.g., fixed or time dependent) is determined by a power services company, communications 113 may be configured to receive a signal or signals relating to the export limit from the power services company and provide the received export limit to controller 113. Controller 113 may receive the export limit from user interface 107.

In step 604, the controller may determine a maximum output power prediction (e.g., maximum output power prediction 506 Figure 5A) of a power manager (e.g., power manager 108). The maximum output power prediction may be determined based on the output power rating of the power manager (e.g., based on the power rating of power converter 112 of power manager 108), the load power consumption prediction, and a grid limit prediction. For example, the maximum output power prediction of the power manger may be determined based on:

$$\text{predicted power manager MAX\_OUT} = \min\{\text{converter rating}, \text{CP} + \text{EL}\} \quad (9)$$

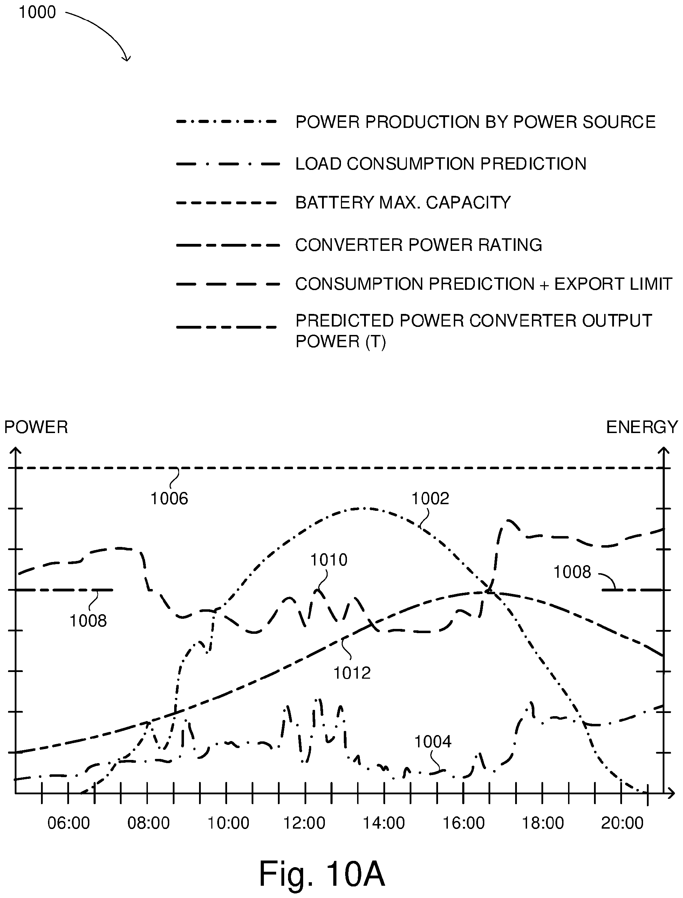

wherein "predicted power manager MAX_OUT" relates to the maximum output power prediction, "converter rating" relates to an output power ratings of a power converter (e.g., power converter 112) in the power manager (e.g., the maximum power the converter can produce - 3.3KW, 5.5KW, 8KW), "CP" relates to the load power consumption prediction, "EL" relates to an export limit (e.g., fixed EL, time varying EL, or predicted EL), and "min" relates to the minimum operator. In Equation (9) the prediction of a maximum output power of the power manager may be based on a minimum between the power ratings of the power converter, and a sum of a prediction of the power consumed by the load, and the export limit. Equation (9) accounts for either case of the power source producing more power than the power converter can output, either due to output power ratings, or due to consumption and export limitations. Since, in equation (9), the consumption prediction may have a time dependent value (e.g., the consumption prediction is a time dependent function), predicted power manager MAX_OUT may also have a time dependent value. The converter rating may be a fixed value or a time dependent value (e.g., the output power of the power converter may change with temperature of the power converter). The converter rating may be predicted (e.g., based on past data) as further elaborated below (e.g., in conjunction with Figures 10A-10C). With reference to Figures 1A-1D, controller 110, may determine a maximum output power prediction of power manager 108.

In Step 606, the controller may determine a prediction of excess power production based on the power production prediction, and the power manager maximum output prediction. For example, a prediction of excess power production may be determined based on:

$$\text{excess\_power\_prediction} = \text{PPP} - \text{predicted power manager MAX\_OUT} \quad (10)$$

where "excess_power_prediction" is the prediction of excess power production (e.g., may be abbreviated EPP), "PPP" is the power production prediction (e.g., power production prediction 502), "predicted power manager_max_out" may be determined as described above. For example, in Figure 5A, the prediction of excess power production may be related to the difference between power production prediction 502 of power source 102, and predicted maximum output power 506 of power manager 108. Excess_power_prediction may be positive or negative. For example, in Figure 5A, at 14:00 excess_power_production, as indicated by double headed arrow 508, is positive. At 08:00 and 18:00 excess_power_production, as indicated by double headed arrows 510 and 512 respectively, is negative. The power production prediction (PPP) may have a time dependent value (e.g., PPP is a time dependent function). As mentioned above, predicted power manager MAX_OUT may also have a time dependent value. Thus, the excess power prediction may have a time dependent value. With reference to Figures 1A-1D, controller 1101 determines a prediction of excess power production.

In step 608, the controller may determine a time-variant SUT (e.g., SUT 518 - Figure 5B) based on the excess power production prediction, and a target SoS at the end of the time period. For example, the SUT may be determined as follows:

$$SUT[n] = SUT[N] - \sum_{i=n+1}^{N}(EPP[i] \cdot \Delta T) \qquad (11)$$

where "SUT[N]" is a target SUT at the end of the time period, "EPP" is the excess power production prediction, and $\Delta T$ is a time differential in the time period. In Equation (11) ($EPP[i] \cdot \Delta T$) may be referred to as an "excess energy differential prediction." For example, in case power production prediction is determined for 24 hours of a day, at intervals of 5 minutes, than $\Delta T$ may be 1/12 (e.g., normalized to 1 hour intervals). In continuous form, the SUT may be determined as follows:

$$SUT(t) = SUT(T) - \int_{\tau=t}^{T} EPP(\tau) \cdot d\tau \qquad (12)$$

For example, in view of SUT 518 (Figure 5B), and equation (12), SUT may be determined based on a backward iterative process, starting from the end of the time period, where the initial value of the iterative process may correspond to a target of the SUT at the end of the time period. For example, in mathematical form, SUT 508 may be determined based on:

$$SUT[n-1] = SUT[n] - EPP[n] \cdot \Delta T \qquad (13)$$

where SUT [N] is a target SoS at the end of the time period. For example, in equation (13), starting with a target SoS at an end of the determined time period (e.g., SUT [N]) as the SUT value of a succeeding time step, and proceeding in an iterative manner, determining for a current time step in the determined time period, a current value of the SUT (e.g., SUT[n-1]), by subtracting a value of the excess energy production prediction of the succeeding time step (e.g., excess_energy_production [n]), from the value of the SUT in the succeeding time step SUT [n]. The current value of the SUT is acting as the succeeding value of the SUT for the preceding time step. Also, the SUT determined by equation (13) may be bounded by a maximum allowed SoS (abbreviated "SoS_max") or a minimum allowed SoS (abbreviated "SoS_min"). One or both of The SoS_max and the SoS_min may vary with time. With reference to Figures 5A and 5B, SUT 508 is related to the excess power production and aims to minimize energy dissipation. With reference to Figures 1A-1D, controller 110 may determine a time-variant SUT.

As mentioned above in conjunction with step 608, the SUT may be determined based on the excess power production prediction, and a target SoS at the end of the time period. The target SoS may be based on the maximum allowed SoS of the energy storage. The target SoS may be determined based on a predicted power production of a future time period (e.g., the next day). For example, the target SoS may be determined to allow storage capacity for energy produced during the future time period.

As described in Figures 5A, 5B and 6, SUT 508 (e.g., determined by controller 110 - Figures 1A-1D) may be based on a power production prediction 502 of a power source and on load power consumption prediction 504 of the power drawn by a load. However, in some cases, the actual power produced by the power source, or the actual power drawn by the load may be different. To account for such differences, SUT 508 may be updated during the time period based on measurements of the actual power produced by the power source or the actual power drawn by the load.

For example, with reference to Figures 1A-1D and 5B, sensor(s) 116 may measure the power generated by power source 102. Controller 110 may update SUT 518, based on these measurements, at a time instance in the time period, For the time instance, controller 110 may determine the energy produced until that time instance, based on the power generated by power source 102. Controller 110 may further determine the predicted energy production until that time instance. Based on the total energy produced until the time instance and corresponding energy production prediction until the time instance, controller 110 may determine a scaling factor. For example, the scaling factor may be determined based on:

$$\text{Scaling\_Factor } [m] = \frac{\text{energy\_produced\_SoFar } [m]}{\text{energy\_predicted\_SoFar } [m]} \qquad (14)$$

where "energy_produced_SoFar" relates to the total energy produced until time instance [m], and "energy_predicted_SoFar" relates to the energy production prediction until time instance [m]. Power production prediction 502 may be multiplied by the determined scaling factor. SUT 518 may be updated (e.g., determined again, as described above in Figure 6 from time step [M] at the end of the time period, to time step [m]). As can be seen in Equation (14), in case actual power production is higher than the power production prediction, the scaling factor is larger than 1. In case actual power production is lower than the power production prediction, the scaling factor may be smaller than 1.

The load power consumption prediction may be updated. For example, based on the energy drawn until a time instance and a corresponding load consumption prediction until the time instance, controller 110 may determine a second scaling factor similar to the scaling factor determined for the energy production prediction . For example, the scaling factor may be based on the ratio between the energy drawn until a time instance and a corresponding load consumption prediction until the time instance. The load power consumption prediction may be based on user provided information. For example, with reference to Figures 1A-1D, in case the load 118 is a house, the user may update the schedule operation of various systems or appliances via user interface 107. User interface 107 may provide the information form the user to controller 110. Controller 110 may employ the information provided by the user to update the load power consumption prediction.

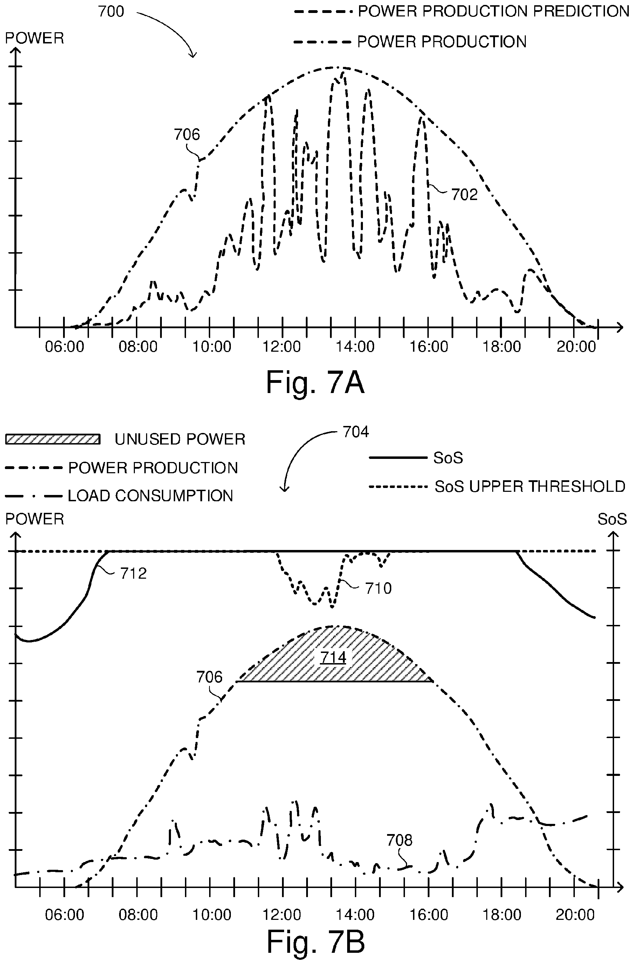

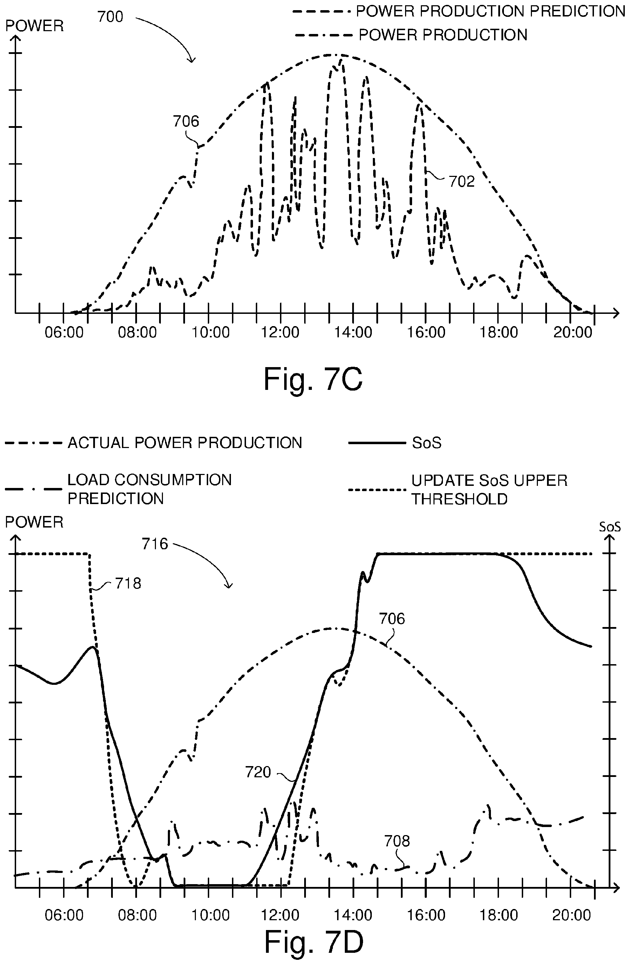

Reference is now made to Figures 7A, 7B, 7C and 7D. Figures 7A and 7B show example time diagrams 700 and 704 respectively, depicting an example of under prediction of the power produced by power source 102 and resulting SUT 710 and SoS 712 according to the disclosure. Diagram 700 depicts a power production prediction 702 of a power source (e.g., power source 102 - Figures 1A-1D). Diagram 704 depicts an actual power production 706 by the power source, actual power consumption 708 by a load (e.g., load 118 Figures 1A-1D). As can be seen in the example of Figure 7A, actual power production 706 may be higher than power production prediction 702. In the example, Diagram 704 further depicts SUT 710 that is time-dependent and determined based on the power production prediction 702, and the actual SoS 712 of power storage 104. As can be seen in Figure 7B from the actual SoS 712, power storage 102 may be fully charged before 08:00. As further seen in Figure 7B, by around 11:00AM, excess energy produced by the power source cannot be used (e.g., either for consumption of for export) and energy may be dissipated, as indicated by hatched area 714. Figures 7C show time diagrams 700 again for convenience of reference, and Figure 7D shows time diagram 716, depicting an example an updated SUT 718, which may be based on a scaled power production prediction (e.g., scaled according to Equations (14)), according to the disclosure. Updated SUT 718 may result in an actual SoS 720 of energy storage 104. As can be seen in Figure 7D, updated SUT 718 may result in utilization of the power produced by the power source reducing the probability of energy dissipation.

According to the disclosure, a power source and an energy storage may be used for reducing costs associated with power consumption by a load. For example, with reference to Figures 1A-1D, when power grid 120 is utility grid 122, importing power from utility grid 122 may incur cost. To reduce costs associated with power consumption by the load 118, system 100 aims to reduce import from power utility grid 122. To reduce power imported from utility grid 122, power system 100 may charge storage 104 with at least sufficient energy to provide power to load 118 during a pricing interval of power import from utility grid 122 (e.g., during hours when prices are high). For example, controller 110 may determine a time-variant SoS lower threshold (time-variant SLT). The time-variant SLT may be based on pricing interval or pricing intervals of power imported (e.g., bought) from utility grid 122, a load power consumption prediction of the power drawn by load 118 during the pricing interval, and a power production prediction of the power produced by power source 102 during the pricing interval.

Reference is now made to Figures 8A and 8B which show diagram 800 and 806 respectively according to the disclosure. Diagram 800 depicts power production prediction 802 and power consumption prediction 804 of a load (e.g., load 118 - Figures 1A-1D). Diagram 806 depicts pricing graph 808, depicting the price of import power from utility grid 122 over a determined time period. As an example, pricing graph 808 comprises five pricing intervals, pricing interval "A," pricing interval "B," pricing interval "C," pricing interval "D," and pricing interval "E." For example, the price of energy import during pricing intervals "B" and "D" may be higher than the price of energy import during pricing intervals "A," "C," and "E." For example, with reference to Figures 1A-1D, controller 110 may be configured to determine pricing graph 808 based on signals relating to pricing (e.g., prices and their related times) received by communications 113 (e.g., from a power services company), or based on data relating to pricing storage in a memory (e.g., a cloud based memory).

Diagram 806 further depicts time-variant SLT 810, which, in the example of Figure 8B, may comprise three SLT sections, SLT section 810A, SLT section 810B, SLT section 810C. Time-variant SLT 810 may be determined (e.g., by controller 110 - Figures 1A-1D) based on a minimum SoS at the start of a pricing interval. For example, point 812 may represent a minimum SoS at the start of pricing interval "B." Minimum SoS 812 may represent a minimum energy level predicted that a load (e.g., load 118 - Figures 1A-1D) may consume during pricing interval "B." Minimum SoS 812 may be determined based on load power consumption prediction 804 (e.g., based on integrating load power consumption prediction 804 over pricing interval "B"). Similarly, point 814 may represent a minimum SoS at the start of pricing interval "D." Minimum SoS 814 may represent a minimum energy level predicted that a load (e.g., load 118 - Figures 1A-1D) may consume during pricing interval "D." Minimum SoS 814 may be determined based on load power consumption prediction 804 (e.g., based on integrating load power consumption prediction 804 over pricing interval "D").

Based on the minimum SoS at start of a pricing interval, an SLT section (e.g., SLT section 810A, or SLT section 810B) of time-variant SLT 810, for an interval prior to the pricing interval, may be determined. For example, based on minimum SoS 812 at the start of pricing interval "B," SLT section 810A may be determined for pricing interval "A." For example, based on minimum SoS 814 at the start of pricing interval "D," SLT section 810B may be determined for pricing intervals "C" and "B." SLT section 810A, 810B and 810C may be combined to determine time-variant SLT 810. Each SLT section 810A, 810B 810C may be determined based on a backward iterative process, starting from SoS at the start of the pricing interval (e.g., points 812 or 814) as further explained below in conjunction with Figure 9.

Reference is now made to Figure 9, which shows an example of a method for determining a time-variant SLT according to the disclosure. For example, the time-variant SLT may be used for reducing cost associated with power consumption by a load, as described above in conjunction with Figures 8A and 8B. In step 900, a controller (e.g., controller 110 - Figures 1A-1D) may determine a load power consumption prediction (e.g., load power consumption prediction 804), of the power predicted to be drawn by a load (e.g., load 118 - Figures 1A-1D) during an interval (e.g., a time interval). The interval may be a pricing interval. For example, the pricing interval may be an interval where the price of power import is relatively high (e.g., interval "B" or interval "D" in Figure 8B). With reference to Figures 1A-1D, controller 110 may determine load power consumption prediction 804.

In step 902, the controller may determine a power production prediction (e.g., power production prediction 802 - Figure 8A), of the power predicted to be produced by a power source (e.g., power source 102 - Figures 1A-1D) during the interval. With reference to Figures 1A-1D, controller 110 may determine power production prediction 804.

In step 903, the controller may determine a maximum battery charge power prediction is determined for the interval. For example, the maximum battery charge power prediction based on maximum possible (e.g., rated) charging power of the battery (max_charging_power), the power production prediction (PPP), and a predicted import limit (e.g., a limit on the power which may be imported from the power gird). The maximum battery charge power prediction (max_bat_charge) may be determined as follows:

$$\text{max\_bat\_charge} = \min\{\text{max\_charging\_power}, \text{PPP} + \text{predicted import limit}\} \quad (15)$$

where "min" is the minimum operator. With reference to Figures 1A-1D, controller 110 may determine a maximum battery charge power prediction.

In step 904, the controller may determine a minimum SoS at the start of the interval based on the load power consumption prediction. For example, the minimum SoS may represent the minimum energy level predicted that the load may consume during the interval. For example, with reference to Figure 8B, point 812 may represent the minimum SoS at the start of interval "B." Point 814 may represent the minimum SoS at the start of interval "D." With reference to Figures 1A-1D, controller 110 may determine the minimum SoS at the start of the interval based on the load power consumption prediction. For example, to determine minimum SoS 812, controller 110 may integrate load power consumption prediction 804 over interval "B." To determine minimum SoS 814, controller 110 may integrate load power consumption prediction 804 over interval "D."

In step 906, the controller may determine a time-variant SLT (TVSLT) based on the minimum SoS at the start of the interval, and the maximum battery charge power prediction during the interval. For example, with reference to Figure 8B, an SLT section of the TVSLT may be determined for a time period prior to the interval. For example, the SLT section 810B is determined for interval "B" and "C," based on minimum SoS 814. The time-variant SLT may be determined for a time period prior to interval based on a backward iterative process, starting from minimum SoS at the start of the pricing interval (e.g., points 812 or 814 - Figure 8B). For example, with reference to Figure 8B, the initial value for interval "D" correspond to point 814 (e.g., the minimum SoS at start of the pricing interval "D"). For example, SLT section 810B of time-variant SLT 810 may be determined based on:

$$\text{time-variant SLT }[i-1] = \text{time-variant SLT }[i] - \text{max\_bat\_charge }[i]*\Delta T \qquad (16)$$

For example, time-variant SLT [I] may be point 814. For example, in equation (15), starting with minimum SoS at an start of a pricing interval (e.g., time-variant SLT [I]) as the value of a succeeding time step, and proceeding in an iterative manner, determining for a current time step in a time period prior to the pricing interval, a current value of the time-variant SLT (e.g., time-variant SLT[i-1]), by subtracting a value of a converted max_bat_charge value (e.g., max_bat_charge [i]) multiplied by an power to energy conversion factor - $\Delta T$), from the value of the time-variant SLT in the succeeding time step (e.g., time-variant SLT [i]). The current value of the time-variant SLT may be used as the succeeding value of the time-variant SLT for the preceding time step. Similarly, SLT sections 810A, and 810C may also be determined. The SLT sections may be combined to determine the time-variant SLT. With reference to Figures 1A-1D, controller 110 may determine a time-variant SLT based on a minimum SoS at the end of the pricing interval, and the power production prediction during the pricing interval.

The disclosure herein relates to determining a time-variant SoS upper threshold, or SoS lower threshold (e.g., either time varying, or constant) for an energy storage (e.g., energy storage 104 - Figures 1A-1D). According to the disclosure herein, a power system (e.g., power system 100 - Figures 1A-1D) may include more than one energy storage. According to the disclosure herein, a time-variant SoS upper threshold, or SoS lower threshold may correspond to the combined capacity of all energy storages in the power system. According to the disclosure herein, each energy storage of the plurality of energy storages may have a corresponding time-variant SoS upper threshold, or a corresponding SoS lower threshold. In case each energy storage has a corresponding time-variant SoS upper threshold, or a corresponding SoS lower threshold, these corresponding thresholds may be determined based on a designation of each energy storage. For example, one of the energy storages may be designated as a backup reserve. Another energy storage may be designated for minimizing energy dissipation from the power source. Yet another energy storage may be designated for peak shaving. In case a single energy storage is employed, that energy storage may have dedicated portions of the capacity thereof for various purposes. For example, 15% of the energy storages may be designated as a backup reserve, 60% of the energy storage may be designated for minimizing energy dissipation from the power source and 25% of the energy storage may be designated for peak shaving. These percentage values are brought herein as an example only and should not be considered limiting. Other partitions may be considered, for example, based on case by case basis.

As described above in Equation (9), a predicted maximum output power of power manager 108 (Figures 1A-1D) is used in determining the time-variant SUT. In Equation (9), the predicted maximum output power of power manager 108 (power manager MAX_OUT) may be defined as a minimum between the power rating of power converter 112, and the sum of the power consumption of load 118 and a prediction and of an export limit to power grid 120. According to aspects of the disclosure herein, instead of the power rating of power converter 112 (Figures 1A-1D), a time dependent prediction of the output power of power converter 112 may be employed, and may be referred to as "predicted_converter_out(t)." The time dependent prediction of the output power of power converter 112 may be predicted based on past data of various parameters as may be further explained below. For example, the time dependent prediction of the output power of power converter 112 may be predicted based on past data of the output power of power converter 112. The time dependent prediction of the output power of power converter 112 may be predicted based on past data of various time dependent parameters which may affect the output power of the power converter (e.g., based on one or more of temperature, export price, and converter efficiency). Thus, the predicted power manager MAX_OUT may also depend on various time-varying parameters. As mentioned above, the consumption prediction (CP) and the export limit (EL) may also depend on time. Thus, the predicted power manager MAX_OUT may be defined as follows:

$$\text{predicted power manager MAX\_OUT} =$$

$$\min\{\text{predicted\_converter\_out(t), CP} + \text{EL}\} \qquad (17)$$

In equation (17) above, the predicted_converter_out(t) may vary with time (e.g., predicted_converter_out(t) is a time dependent function), and may be predicted based on various time-dependent parameters, which may affect the output power of power converter 112 over time. For example, in some cases, the temperature of power converter 112 may affect the output power of power converter 112. Power converter 112 may reduce the output power thereof based on the temperature of power converter 112, to maintain the temperature of power converter 112 at or below a threshold (e.g., may be referred to as "temperature derating"). The price of exporting power to power grid 120 may change with time, and it may be beneficial to export power to power grid 120 (Figure 1A) at some time periods over others. Thus, power converter 112 may decrease the output power in case the export prices are low and increase the output power in case the export prices are high. The efficiency of power converter 112 may change over time, based on changes in power produced by power source 120, changes in power drawn by load 118, or both. Predicted_converter_out(t) may be determined based on these factors.

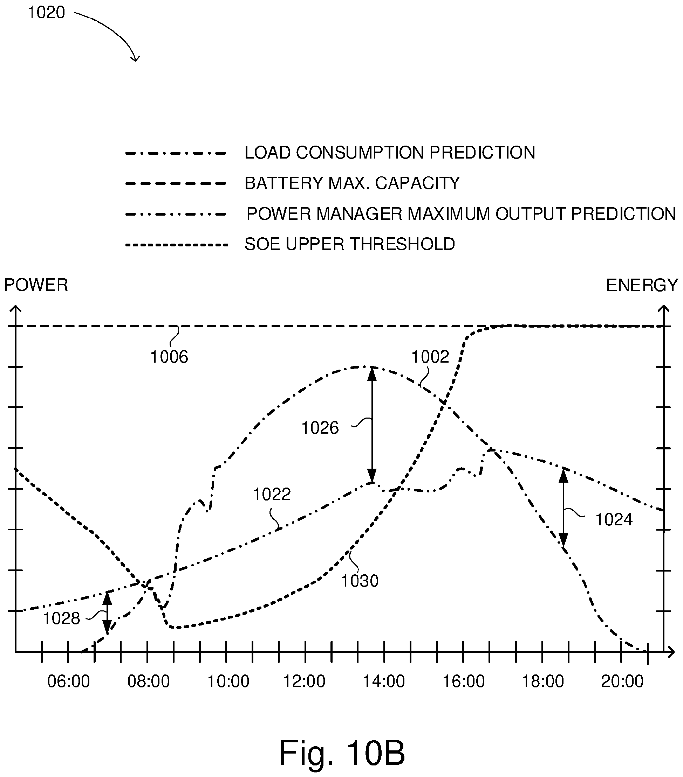

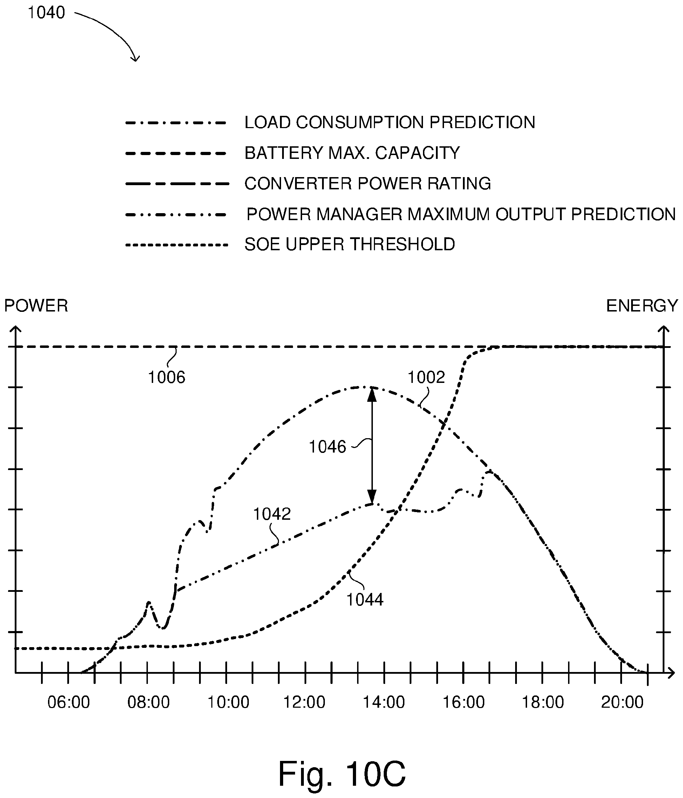

Reference is made to Figures 10A, 10B and 10C, which show an example of diagrams 1000, 1020 1040 respectively, depicting various time dependent parameters, which may be employed for determining an SUT 1030 or an SUT 1044, according to the disclosure. Reference may also be made to Figures 1A-1D. In the example of Figures 10A, 10B and 10C, the various time dependent parameters are depicted over a time period (e.g., between 04:40 in the morning, and 20:20 in the evening). Diagram 1000 shows a power production prediction 1002 of the power that power source 102 is predicted to produce, a load power consumption prediction 1004 of the power load 118 is predicted to draw, a capacity 1006 of energy storage 104, a power ratings 1008 of power converter 112 (shown in two parts for the sake of the clarity of the figure). Diagram 1000 further shows a consumption prediction plus export limit (CP+EL) 1010, and predicted time dependent converter output power 1012 (predicted_converter_out(t)).

In the example shown in diagram 1000, predicted power manager MAX_OUT is determined based on a time varying export price. For example, the rates which a power services company may reimburse a customer may vary during the day. For example, the rates at which a power services company reimburse a customer (e.g., the export prices) may be higher at noon, than during morning, afternoon and night time. As such it may be beneficial to reduce the output power of power converter 112 during the morning, afternoon and night time (e.g., to reduce the power exported to power grid 120), and to increase the output power of power converter 112 during the noon hours (e.g., to increase the exported power to power grid 120). A time dependent function of the converter maximum output power may be determined based on these export rates. Such a function may be as follows:

$$\text{predicted\_converter\_out(t)} = \text{converter rating} * \left( \frac{\text{Export Price (t)}}{\text{Max. Export Price}} \right)^x \qquad (18)$$

In equation (18), 'Export Price (t)' is relates to the export price as a function of time (e.g., as may be determined by a power services company), 'Max. Export Price' relates to the maximum export price, and 'x' may be an exponential factor employed for controlling the effect of the export price on the SUT.

Figure 10B may show power production prediction 1002 and capacity 1006. Figure 10B further may show predicted power manager maximum output (predicted power manager MAX_OUT (t)) 1022, and the determined SUT 1030. Predicted power manager MAX_OUT (t)) 1022 may be determined based on Equation (17) above. SUT 1030 may be determined based on Equation (13) above, where the excess power production (EPP) may be indicated by double headed arrows 1024, 1028 and 1028.

Figures 10A and 10B show that a time dependent predicted converter output power (predicted_converter_out(t)) may allow for varying export prices. Predicted_converter_out(t) may, similarly, allow for other time dependent factors. Determining a predicted_converter_out(t), which allows for time dependent factors, may be achieved by adding a time dependent function to the power rating of power converter 112. Determining a predicted_converter_out(t), which allows for various factors, may be achieved by multiplying the power rating of power converter 112 by a time dependent function (e.g., as shown in Equation (18)). The time dependent function may correspond to the times in which it may be desired to change the converter output.

For example, the time dependent factor may be the temperature of power converter 112. The temperature of power converter 112 may change over time. In some cases, controller 112 may limit the output power of power converter 112 based on the temperature of power converter 112. Controller 112 may limit the output power of power converter 112 in case the temperature of power converter 112 exceeds a threshold. For example, the temperature of power converter 112 may increase during noon hours and decrease during one or more of the morning, afternoon and night times. As the temperature of power converter 112 increases, the output power of power converter 112 may decrease. As such it may be beneficial to allow for a reduction in the output power of power converter 112 during the noon hours and an increase of the output power of power converter 112 during the one or more morning, afternoon, and night times. An example of a function allowing for the changes in the temperature of power converter 112 may be as follows:

$$\text{predicted\_converter\_out(t)} = \text{converter rating} * \left( \frac{\text{Max\_Temp} - \text{Predicted Temp.(t)}}{\text{Max\_Temp} - \text{Min\_Temp}} \right)^x \quad (19)$$

In equation (19), "Predicted Temp.(t)" may relate to the predicted temperature of power converter 112 as a function of time, "Max_Temp" may relate to the maximum rated temperature of power converter 112, and "Min_Temp" may relate to the minimum rated temperature of power converter 112, and "x" may be an exponential factor employed for controlling the effect of the changes in temperature of power converter 112 on the SUT.

The efficiency of power converter 112 may change over time, based on changes in power produced by power source 120, changes in power drawn by load 118, or both. As such, it may be beneficial to reduce the output power of power converter 112 in cases where the efficiency of power converter 112 is low. An example of a function allowing for the changes in the efficiency of power converter 112 may be as follows:

$$\text{predicted\_converter\_out(t)} = \text{converter rating} * \left(\frac{\text{Predicted\_Converter\_Eff (t)}}{\text{Converter\_Max\_Eff}}\right)^x \quad (20)$$

In equation (20), "Predicted_Converter_Eff (t)" may relate to the predicted efficiency of converter 112 as a function of time, "Converter_Max_Eff" may relate to the maximum efficiency of power converter 112, and 'x' may be an exponential factor employed for controlling the effect of the changes in the efficiency of power converter 112 on the SUT.

The time dependent predicted output power (predicted_converter_out(t)) of power converter 112 may also be determined based one past data of the output power of power converter 112. For example, predicted_converter_out(t) may be determined based on past data (e.g., a previous day or an average of previous days) of the output power of power converter 112, for a corresponding time period (e.g., between 04:40 in the morning, and 20:20 in the evening). Predicted_converter_out(t) may be determined based on converter output at the pertinent date over past years.

According to aspects of the disclosure herein, the SUT may be monotonically increasing. Therefore, the predicted excess power (EPP) should be larger or equal to zero (e.g., EPP ≥ 0). To achieve EPP ≥ 0, the power manager maximum output power may be:

$$\text{predicted power manager MAX\_OUT(t)} =$$

$$\min\{\text{predicted\_converter\_out(t), CP(t) + EL(t), PPP}\} \quad (21)$$

where "PPP" is the power production prediction of power source 102 as above. Thus, the expression in Equation (10) shall be equal or higher than zero. With reference to Figure 10C, diagram 1040 shows a power production prediction 1002, capacity 1006 of energy storage 104. Diagram 1040 shows predicted power manager MAX_OUT (t)) 1042 based on Equation (21) and the resulting determined SUT 1044. As seen in Figure 10C, the EPP 1046 is equal or larger than zero resulting in a monotonically increasing SUT.

According to the disclosure herein the SUT may be determined based on more than one time-varying parameters. For example, controller 110 (Figures 1A-1D) may determine a plurality of predicted time-dependent power converter outputs, each predicted_converter_out(t) relating to a corresponding time-varying parameter (e.g., export price, power converter temperature, power converter efficiency). Controller 110 may employ a weighted linear combination of the corresponding predicted_converter_out(t)'s (e.g., may be abbreviated PCO(T) for clarity), for example, as follows:

$$\text{PCO(t)} = \omega_1 \cdot \text{PCO}_1(t) + \omega_1 \cdot \text{PCO}_2(t) + \ldots + \omega_n \cdot \text{PCO}_n(t) \quad (22)$$

where $\text{PCO}_i(t)$ is a predicted_converter_out(t) relating to a corresponding time-varying parameter, $\omega_i$ is a weight corresponding to $\text{PCO}_i(t)$, and where $\omega_1 + \omega_1 + \ldots + \omega_n = 1$

According to aspects of the disclosure, discharging the energy storage may be controlled using the SUT. For example, the energy storage may be controlled to discharge at predetermined times. By adding a predetermined discharge power to the power production prediction, predicted power manager MAX_OUT(t) may be raised above the actual power production prediction. According to Equation (10), this may result in negative excess power prediction, which may cause the SUT to fall at the predetermine time, thus causing the energy storage to discharge. Controlling the energy storage to discharge at predetermined times may be as follows.

$$\text{predicted power manager MAX\_OUT(t)} =$$

$$\min\{\text{predicted\_converter\_out(t), CP(t) + EL(t), PPP+Discharge(t)}\} \quad (22)$$

where "Discharge(t)" relates to the predetermined discharge power and times.

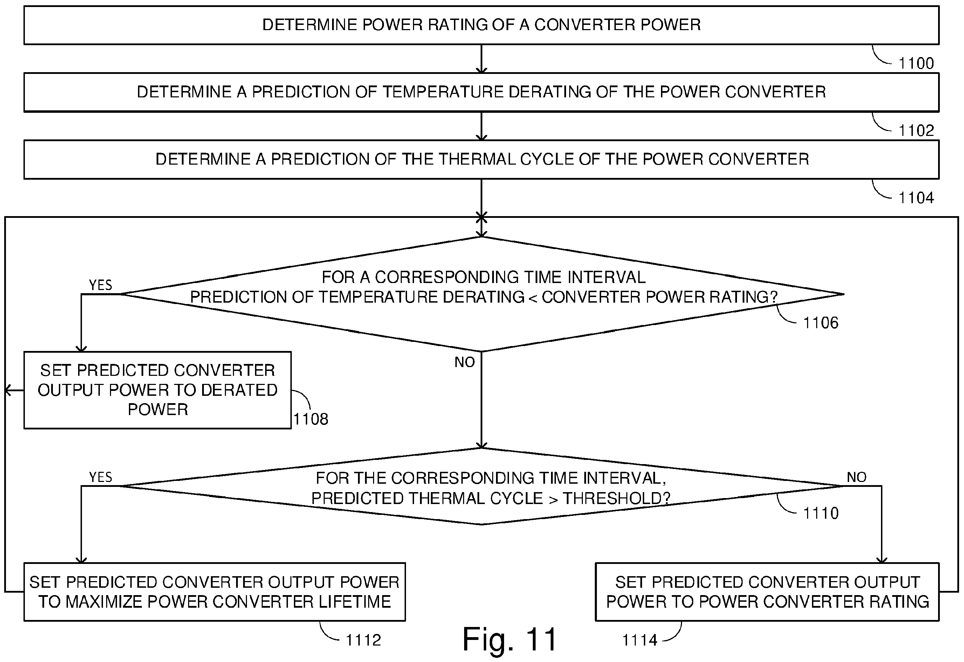

According to aspects of the disclosure, a time-dependent predicted power converter output power may be determined iteratively, based on a prediction of various, time-dependent factors. Reference is made to Figure 11, which show an example of a method for determining a time-dependent predicted power converter output power. The example in Figure 11 may relate to a temperature derating of the output power of the power converter (e.g., power converter 112 - Figures 1A-1D) and to the thermal cycle of the power converter. A thermal cycle of a power converter may relate to the difference between a minimum temperature and a maximum temperature during the operation of the power converter. The number of thermal cycles and the temperature difference between minimum and maximum temperatures may affect the lifetime of the power converter.

In step 1100, a controller (e.g., controller 110, Figures 1A-1D) may determine a power rating of a converter power (e.g., converter 112, Figures 1A-1D).

In step 1102, the controller may determine a prediction of temperature-derated output power of the power converter. For example, the temperature-derated output power may be predicted for a predetermined time period (e.g., 24 hour, 12 hours or other time period such as between 04:40 in the morning, and 20:20 in the evening shown in various Figures above).

In step 1104, the controller may determine a prediction of the thermal cycle of the power converter. The thermal cycle of the power converter may also be for a predetermined time period.

In step 1106, for a corresponding time interval of the prediction of the temperature-derating of the power converter, and of the prediction of the thermal cycle of the power converter, the controller may determine the level of the temperature-derated output power of the power converter, relative to the power rating of the power converter. In case the level of the temperature-derated output power of the power converter is lower than the power rating of the power converter, the method may proceed to step 1108. In case the level of the temperature-derated output power of the power converter is higher than the power rating of the power converter, the method may proceed to step 1110.

In step 1108, the controller may set the output power of a power converter (power converter 112 - Figures 1A-1D), of the corresponding time interval, to the level of the temperature-derated power. After step 1108 the method may return to step 1106.

In step 1110, for each corresponding time interval of the prediction of the temperature derating of the power converter and of the prediction of the thermal cycle of the power converter, the controller may determine the level of predicted thermal cycle (e.g., a difference between predicted minimum and maximum temperature of the inverter) relative to a threshold. In case the level of the thermal cycle is lower than the threshold, the method may proceed to step 1112. In case the level of the thermal cycle is higher than the threshold, the method may proceed to step 1114.

In step 1112, the controller may set the predicted output power of power converter 112, at the corresponding time interval, to a level that maximizes an expected lifetime of power converter 112. The level of the predicted output power of power converter 112 that maximizes an expected lifetime of power converter 112 may be determined by a computational model. For example, the computational model may be based on the Coffin-Manson equation or the Norris-Landzberg equation. After step 1112, the method may return to step 1106.

In step 1114, the controller may set the predicted output power of power converter 112, at the corresponding time interval, to the converter power rating. After step 1114, the method may return to step 1106.

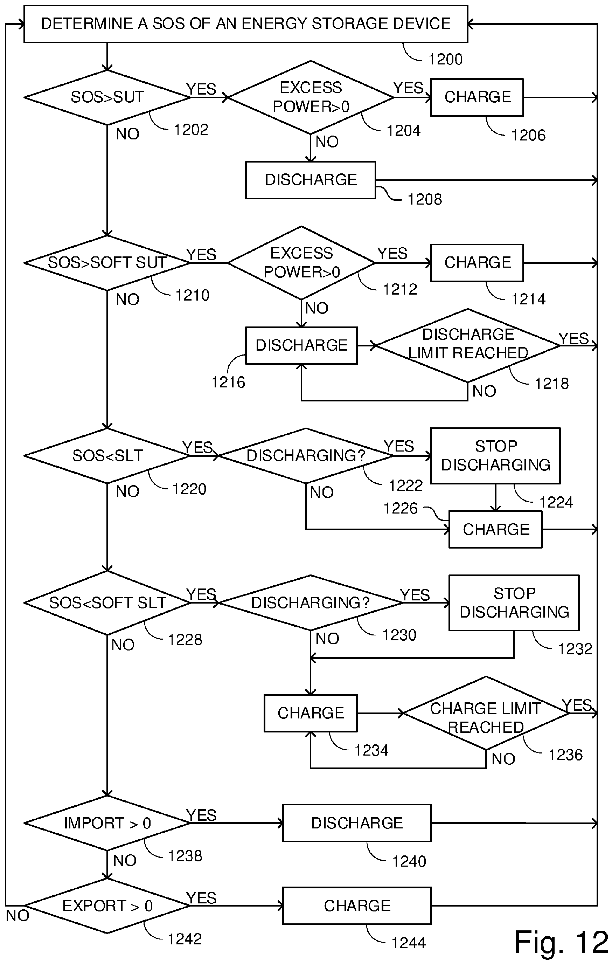

According to the disclosure hereinabove, the charging or discharging of energy storage 104 (Figures 1A-1D), as well as the import or export of power to power grid 120 (Figures 1A-1D) may be based on one or more of a SoS upper threshold (SUT) and an SoS lower threshold (SLT). According to aspects of the disclosure herein, the charging or discharging of energy storage device 104 (Figures 1A-1D) may be based on additional thresholds and conditions. For example, the charging or discharging of energy storage device 104 (Figures 1A-1D) may be based on the SUT and the SLT, a soft SUT and a soft SLT. The soft SUT may be lower than the SUT. The soft SLT may be higher than the SLT. Employing additional thresholds may aid in further reducing the probability that power produced by the power source may be dissipated and not be used. Reference is now made to Figure 12, which shows a method for charging or discharging of an energy storage (e.g., energy storage 104), as well importing of power to a power grid or exporting of power to a power grid, based on several thresholds.

In step 1200, a controller (e.g., controller 110 - Figures 1A-1D) may determine, a State of Storage (SoS) of an energy storage device (e.g., energy storage 104 - Figures 1A-1D). The SoS may be state of energy (SOE) or state of charge (SOC). Similar to as described above in conjunction with Figures 4A, controller 110 may employ measurements from sensor(s) (e.g., (e.g., sensor(s) 116 - Figures 1A-1D) to determine the SoS. For example, controller 110 may employ voltage measurements (e.g., from sensors measuring the voltage across storage terminals $132_1$ and $132_2$), current measurements (e.g., from sensors measuring the current through storage terminals $132_1$ or $132_2$), temperature measurements of temperature sensors, specific gravity measurements of specific gravity sensors, humidity measurements of humidity sensors, or any combination of measurements thereof to determine the SoS of energy storage 104.

In step 1202, the controller determines the level of the SoS relative to an SUT. For example, the SUT may be one or more of SUT's 310, 318, 518, 710, 718, 1030, or 1044 described above in Figures 3B, 3C, 5B, 7B, 7D, 10B, and 10C. In case the level of the SoS is larger than the SUT, the method may proceed to step 1204. In case the level of the SoS is smaller than the SUT, the method may proceed to step 1210.

In step 1204, the controller determines if the power source produces excess power. In case the power source produces excess power (e.g., excess power > 0), the method may proceed to step 1206. In case the power source does not produces excess power, the method may proceed to procedure 1208 (e.g., excess power < 0), the method may proceed to step 1208.

In step 1206, the controller may control the energy storage to charge from the power source. The method may return to step 1200.

In step 1208, the controller may control the energy storage to discharge energy. The controller may control energy storage may discharge either to the power source or to the load. The method may return to step 1200.

In step 1210, compare, by the controller the level of the SoS relative to a soft SUT. For example, the soft SUT may be determined by iterating backward from a target SoS, and subtracting energy consumption prediction at each time step. The energy consumption prediction may be based on the power consumption prediction multiplied by a time interval corresponding to the time step. In case the level of the SoS is larger than the soft SUT, the method may proceed to step 1212. In case the level of the SoS is smaller than the soft SUT, the method may proceed to step 1220.

In step 1212 the controller determines if the power source produces excess power. In case the power source produces excess power, the method may proceed to procedure 1214. In case the power source does not produces excess power, the method may proceed to procedure 1208, the method may proceed to step 1216.

In step 1214, the controller may control the energy storage to charge from the power source. The method may return to step 1200.

In step 1216, the controller may control the energy storage to discharge energy. The controller may control the energy storage to discharge either to the lowed or to the gird.

In step 1218, the controller determines is a discharge power limit is reached. This discharge power limit may limit the discharge rate of the energy storage in case the SoS is above the soft SUT but below the SUT. In case the discharge power limit is reached, the method may return to step 1200. In case the discharge power limit is not reached, the method may return to step 1216.

In step 1220, the controller compares the level of the SoS relative to an SLT. For example, the SUT may be SLT 810 described above in Figure 8B. In case the level of the SoS is smaller than the SLT, the method may proceed to step 1222. In case the level of the SoS is larger than the SLT, the method may proceed to step 1228.

In step 1222, the controller determines if the energy storage is discharging. In this step the energy storage is below the SLT and should charge in order to bring the SoS to or above the SLT. In case the energy storage is discharging, the method may proceed to step 1224. In case the energy storage is not discharging, the method may proceed to step 1226.

In step 1224 the controller controls the energy storage to stop discharging.

In step 1226 the controller controls the energy storage to charge. The energy storage may charge either from the power source or from the gird. The method may return to step 1200.

In step 1228, the controller compares the level of the SoS relative to a soft SLT. For example, the soft SLT may be determined by iterating backward from a target SoS and subtracting an energy production prediction at each time interval. The energy production prediction may be based on the power production prediction multiplied by a time interval corresponding to the time step. In case the level of the SoS is smaller than the soft SLT, the method may proceed to step 1230. In case the level of the SoS is larger than the soft SLT, the method may proceed to step 1238.

In step 1230, the controller determines if the energy storage is discharging. In this step the energy storage is below the soft SLT and above the SLT and should charge. In case the energy storage is discharging, the method may proceed to step 1232. In case the energy storage is not discharging, the method may proceed to step 1234.

In step 1232 the controller controls the energy storage to stop discharging.

In step 1234 the controller controls the energy storage to charge. The energy storage may charge either from the power source or from the gird. The method may return to step 1200.

In step 1236, the controller determines is a charge power limit is reached. This charge power limit may limit the charge rate of the energy storage in case the SoS is above the SLT but below the soft SUT. In case the discharge power limit is reached, the method may return to step 1200. In case the discharge power limit is not reached, the method may return to step 1234.

In step 1238, the controller compares the level of import of power from the power grid. In this case the SoS is between the soft SLT and the soft SUT and the controller may control the energy storage to discharge in case the system is importing power from the grid. In case, the level of import from the power grid is larger than zero, the method may proceed to step 1240. In case, the level of import from the power grid is smaller than zero, the method may proceed to step 1242.

In step 1240, the controller controls the energy storage to discharge the energy storage to the load. For example, controller 110 may control storage interface 106 to discharge energy storage 104 in case the level of import from power grid 120 is larger than zero. The method may return to step 1200.

In step 1242, the controller compares the level of exported power to the power grid. In this case the SoS is between the soft SLT and the soft SUT and the controller may control the energy storage to charge in case the system is exporting power to the grid. In case, the level of export to the power grid is larger than zero, the method may proceed to step 1242. In case, the level of export to the power grid is smaller than zero, the method may return to step 1200.

In 1244 1224, the controller controls the energy storage to charge the energy storage from the grid. For example, controller 110 may control storage interface 106 to charge energy storage 104 in case the level of export to power grid 120 is larger than zero. The method may return to step 1200.

The present application also discloses the subject matter of the following clauses.

Clause 1: A system comprising:

an energy storage;
a storage interface, coupled to the energy storage and configured to charge or discharge the energy storage;

a controller, configured to:

determine a state-of-storage (SoS) of the energy storage; and
control the storage interface to charge and discharge the energy storage based on the SoS of the energy storage, and based on a time-variant state-of-storage upper threshold (SUT).

Clause 2: The system of Clause 1, further comprising:

a power source configured to produce power;
a power manager having a maximum output power;
a load drawing a load power; and
a power grid,
wherein the power manager comprises the controller.

Clause 3: The system of Clause 2, wherein the controller is configured to control the storage interface to charge the energy storage based on one of:

power produced by the power source being higher than the maximum output power of the power manager; or
the power produced by the power source is lower than the maximum output power of the power manager, the SoS being lower than the SUT, and the power produced by the power source being higher than the power drawn by the load.

Clause 4: The system of any of Clauses 2-3, wherein the controller is configured to control the storage interface to discharge the energy storage based on one of:

the power produced by the power source being lower than maximum output power of the power manager, and the SoS being higher than the SUT; or
the power produced by the power source being lower than maximum output power of the power manager, the SoS being lower than the SUT, and the power produced by the power source being lower than the power drawn by the load.

Clause 5: The system of any of Clauses 2-4, wherein the controller is further configured to control the storage interface to charge or discharge the energy storage based on a SoS lower threshold (SLT).

Clause 6: The system of Clause 5, wherein the controller is configured to control the storage interface to charge the energy storage based on one of:

the power produced by the power source being higher than the maximum output power of the power manager;
the power produced by the power source being lower than the maximum output power of the power manager, the SoS being lower than the SUT, and the SoS being lower than the SLT; or
the power produced by the power source being lower than the maximum output power of the power manager, the SoS being lower than the SUT, the SoS being higher than the SLT, and the power produced by the power source is higher than the power drawn by the load.

Clause 7: The system of Clause 5, wherein the controller is configured to control the storage interface to discharge the energy storage based on one of:

the power produced by the power source is lower than maximum output power of the power manager, and the SoS is higher than the SUT; or

the power produced by the power source being lower than the maximum output power of the power manager, the SoS being lower than the SUT, the SoS being higher than the SLT, and the power produced by the power source is lower than the power drawn by the load.

Clause 8: The system of any of Clauses 5-7, wherein the controller is further configured to determine a charging power to charge the energy storage, and control the storage interface to charge the energy storage from the power source based on one of:

power level desired to charge the energy storage to the SLT being lower than the power produced by the power source; or

the power level desired to charge the energy storage to the SLT being higher than the power produced by the power source, charging from the power grid being unavailable, and updating the charging power.

Clause 9: The system of any of Clauses 5-7, wherein the controller is further configured to determine a charging power to charge the energy storage, and control the storage interface to charge the energy storage from one of the power source or the power grid based on the power desired to charge the energy storage to the SLT being higher than the power produced by the power source, charging from the power grid being available, and determining a charging power from the power grid and a charging power form the power source.

Clause 10: The system of any of Clauses 3-9, wherein the controller is configured to determine a power for discharging the energy storage, and further configured to one of:

discharge the energy storage to the load based on the power produced by the power source being lower than the power drawn by the load;

dissipate power based on the power produced by the power source being higher than the power drawn by the load, and a grid limit reached;

discharge to the power gird based on the power produced by the power source being higher than the power drawn by the load, the grid limit not reached and power not being imported from the power grid; or

reduce import from the power grid and discharging to the load based on the power produced by the power source being higher than the power drawn by the load, the power gird limit not reached and power being imported from the power grid.

Clause 11: The system of any of Clauses 2-10, wherein the maximum output power of the power manager is a minimum between one of a power limit of the power manager, and the sum of a grid limit and a current power drawn by the load,

wherein grid limit is a sum of a power imported from the power grid and an export limit.

Clause 12: The system of any of Clauses 2-11, wherein the controller is configured to determine the SUT for a time period based on an excess power production prediction of the power produced by the power source for the time period, and a target SoS at the end of the time period.

Clause 13: The system of Clause 12, wherein the controller is configured to determine the excess power production prediction for the time period based on a power production prediction of the power produced by the power source during the time period, and a maximum output power prediction of the power manager during the time period.

Clause 14: The system of Clause 13, wherein the maximum output power prediction of the power manager is determined based on a load power consumption prediction during the time period, and an export limit to the power grid during the time period.

Clause 15: The system of Clause 14, wherein, the controller is configured to determine the maximum output power prediction of the power manager based on a minimum value between a prediction of the output power of the power manager, and a sum of a load power consumption prediction of the load and an export limit to the power grid, wherein the export limit corresponds to a limit on the power the power manager can export to the power grid.

Clause 16: The system of Clause 15, wherein a prediction of the output power of the power manager is based on a time dependent prediction of an output power of a power converter of the power manager

Clause 17: The system of Clause 13, wherein the power production prediction of the power source is determined based on past power production or past energy production of the power source.

Clause 18: The system of Clause 13, wherein the load power consumption prediction is determined based on past power consumption or past energy consumption by the load.

Clause 19: The system of Clause 18, wherein one of the past power production of the power source and past power or energy consumption by the load, are pre-scaled.

Clause 20: The system of Clause 13, wherein the controller is configured to determine the SUT for the selected time period based on:

determining a target SoS at an end of the selected time period and proceeding in an iterative manner, wherein the target SoS is an initial SUT in a succeeding time step.
determining for each time step in the selected time period, a current value of the SUT, by subtracting a value of an excess energy differential prediction of the succeeding time step, from the value of the SUT in the succeeding time step,
wherein, the current value of the SUT is configured to be a succeeding value of the SUT for the preceding time step,
wherein the excess energy differential prediction is determined based on the excess power production prediction and a time differential.

Clause 21: The system of Clause 20, wherein the excess power production prediction is based on a consumption prediction of the load and on a prediction of the output power of a power converter on the power manager.

Clause 22: The system of Clause 21, wherein the prediction of the output power of the power converter on the power manager is a time dependent.

Clause 23: The system of any of the preceding Clauses, wherein at a time instance, the SUT is updated based on a scaling factor.

Clause 24: The system of Clause 20, wherein the scaling factor is determined based on a ratio between the energy produced by the power source until the time instance, and predicted energy production until the time instance.

Clause 25: The system of Clause 20, wherein the scaling factor is determined based on a ratio between the power drawn by the load until the time instance, and predicted power drawn by the load until the time instance

Clause 26: The system of any of Clauses 5-25, wherein the SLT is a time-variant SLT.

Clause 27: The system of Clause 26, wherein the controller is configured to determine a maximum battery charge power prediction based on a power production prediction of the power produced by the power source during the interval, a maximum charging power of the energy storage, and a predicted import limit.

Clause 28: The system of Clause 27, wherein the controller is configured to determine the time-variant SLT based on a minimum SoS at the start of the interval, and based on:
starting with the minimum SoS for the start of the interval as the time-variant SLT value in a succeeding time step, and proceeding in an iterative manner, determining for a current time step in a time period prior to the interval, a current value of the time-variant SLT, by subtracting a value of the maximum battery charge power prediction of the succeeding time step, from the value of the time-variant SLT in the succeeding time step, where the current value of the time-variant SLT is acting as the succeeding value of the time-variant SLT for the preceding time step.

Clause 29: The system of any of Clauses 27-28, wherein the interval is a pricing interval of the price of power imported from the power grid.

Clause 30: The system of any of Clauses 28-29, wherein the minimum SoS at the start of the interval is determined based on a load power consumption prediction of the load power,

Clause 31: The system of any of Clauses 28-30, wherein the minimum SoS is a minimum energy level determined for the load during the interval.

Clause 32: The system of any of the Clauses 2-31, wherein the power manager further comprises communications coupled with the controller, the communications configured to transmit or receive signals.

Clause 33: The system of Clause 32, wherein the communications is configured to receive signals relating to pricing, wherein the controller is configured to determine a pricing graph based on the received signal relating to pricing.

Clause 34: The system of any of Clauses 2-33, wherein the power manager comprises:
a power converter, configured to converter the power generated by one of power source, from energy storage, or from power grid, to power ratings compatible for consumption by the load.

Clause 35: The system of Clause 34, wherein the power manager further comprises a meter, configured to:

    monitor the power imported from the power grid; or
    monitor the power exported to power grid.

Clause 36: The system of any of Clauses 1-35, wherein the controller comprises one of a microcontroller, a microcomputer, or a cloud server.

Clause 37: The system of any of Clauses 2-36, wherein the power source comprises a plurality of photovoltaic generators, one or more of the photovoltaic generators is configured to be coupled to a DC/DC converter configured to extract power from respective PV generator according to a maximum power point tracking algorithm.

Clause 38: The system of any of Clauses 2-36, wherein the power source comprises a plurality of photovoltaic generators, one or more of the photovoltaic generators is configured to be coupled to a DC/AC microinverter configured to extract power from the respective PV generator according to a maximum power point tracking algorithm.

Clause 39: The system of Clause 38, wherein power outputs of the DC/AC micro-inverters are connected to an AC power bus, and the storage interface is connected to the AC power bus and to the energy storage device.

Clause 40: The system of any of Clauses 1-39, wherein the storage interface comprises a power converter configured to converter power from the energy storage to power ratings used the power manager.

Clause 41: The system of Clause 40, wherein the storage interface is a bidirectional DC/DC converter.

Clause 42: The system of any of the preceding Clauses, further comprising a user interface, coupled with the controller, configured to receiving information from a user and to provide information to the user,
wherein the information from the user comprises a schedule of operation of machines or appliances.

Clause 43: The system of Clause 42, wherein the controller determines a load power consumption prediction based on the information from the user.

Clause 44: A method comprising:

    determining:

        a time-variant state-of-storage upper threshold (SUT);
        a state-of-storage (SoS) of an energy storage;
        a power drawn by a load;
        a power produced by a power source;
        a maximum output power of a power manager;

    charging the power storage based on one of:

        the power produced by the energy power source being higher than the maximum output power of the power manager; or
        the power produced by the energy power source being lower than the maximum output power of the power manager, the SoS being lower than a time-variant state-of-storage upper threshold (SUT), and the power produced by the power source being higher than the power drawn by the load; and

discharging the power storage based on one of:

the power produced by the power source being lower than the maximum output power of the power manager, and the SoS being higher than the SUT; or

the power produced by the power source being lower than the maximum output power of the power manager, the SoS being lower than the SUT, and the power produced by the power source being lower than the power drawn by the load.

Clause 45: The method of Clause 44, wherein the charging and discharging of the energy storage is further based on a SoS lower threshold (SLT).

Clause 46: The method of Clause 45, further comprises charging the energy storage based on the power produced by the power source being lower than the maximum output power of the power manager, the SoS being lower than the SUT, further comprises determining that the SoS is lower than the SLT.

Clause 47: The method of Clause 45, wherein the charging of the energy storage based on the power produced by the power source being lower than the maximum output power of the power manager, the SoS being lower than the SUT, and the power produced by the power source is higher than the power drawn by the load, further comprises determining that the SoS is higher than the SLT.

Clause 48: The method of Clause 45, wherein the discharging of the energy storage based on the power produced by the power source being lower than the maximum output power of the power manager, the SoS being lower than the SUT, and the power produced by the power source being lower than the power drawn by the load, further comprises determining that the SoS is higher than the SLT.

Clause 49: The method of any of Clauses 45-48, further comprising the steps of:

determining a charging power to charge the energy storage; and
charging the energy storage from the power source based on one of:

the power desired to charge the energy storage to the SLT being lower than the power produced by the power source; or
the power desired to charge the energy storage to the SLT being higher than the power produced by the power source, charging from the power grid being unavailable, and updating the charging power.

Clause 50: The method of any of Clauses 45-49, further comprising the steps of:

determining a charging power to charge the energy storage; and
charging the energy storage from one of the power source or the power grid based on the power desired to charge the energy storage to the SLT being higher than the power produced by the power source, charging from the power grid being available, and determining a charging power from the power grid and a charging power form the power source.

Clause 51: The method of any of Clauses 45-49, further comprising the step of determining a power for discharging the energy storage, and further comprising one of:

discharging the energy storage to the load based on the power produced by the power source being lower than the power drawn by the load;
dissipating power based on the power produced by the power source being higher than the power drawn by the load, and a grid limit reached;
discharging to the power grid based on the power produced by the power source being higher than the power drawn by the load, the grid limit not reached and power not being imported from the power grid; or
reducing import from the power grid and discharging to the load based on the power produced by the power source being higher than the power drawn by the load, the grid limit not reached and power being imported from the power grid.

Clause 52: The method of any of Clauses 44-51, wherein the maximum output power of the power manager is a minimum between the power manager ratings, and the sum of a grid limit and a current power drawn by the load,

wherein grid limit is a sum of a power imported from the power grid and an export limit.

Clause 53: The method of any of Clauses 44-52, further comprising the step of determining the SUT for a time period based on an excess power production prediction of the power produced by the power source for the time period, and a target SoS at the end of the time period.

Clause 54: The method of Clause 53, further comprising the step of determining the excess power production prediction of the power produced by the power source during the time period, based on a difference between the power production prediction and the output power prediction of the power manager.

Clause 55: The system of Clause 53, wherein a prediction of the output power of the power manager is based on a time dependent prediction of an output power of a power converter of the power manager

Clause 56: The method of Clause 54, further comprising the steps of:

determining a load power consumption prediction of the power predicted to be drawn by the load during the time period;
determining a power production prediction of the power predicted to be produced by the power source during the time period; and
determining the maximum output power prediction of the power manager based on a load power consumption prediction during the time period, and an export limit to the power grid during the time period.

Clause 57: The method of Clause 55, wherein the maximum output power prediction of the power manager is determined based on a minimum value between the maximum rated power of the power manager, and a sum of a load power consumption prediction of the load and an export limit to the power grid,
wherein the export limit corresponds to a limit on the power the power manager can export to the power grid.

Clause 58: The method of Clauses 54, wherein the power production prediction of the power source is determined based on past power production or past energy production of the power source.

Clause 59: The method of Clause 55, wherein the load power consumption prediction is determined based on past power consumption or past energy consumption by the load.

Clause 60: The method of any of Clauses 55-59, wherein one of the past power production of the power source, or past power or energy consumption by the load, are pre-scaled.

Clause 61: The method of Clause 60, wherein the load power production prediction is determined based on user provided information.

Clause 62: The method of Clause 44, wherein said step of determining the SUT comprises the steps:

determining a target SoS at an end of the selected time period and proceeding in an iterative manner, wherein the target SoS is an initial SUT in a succeeding time step.
determining for each time step in the selected time period, a current value of the SUT, by subtracting a value of an excess energy differential prediction of the succeeding time step, from the value of the SUT in the succeeding time step,
wherein, the current value of the SUT is configured to be a succeeding value of the SUT for the preceding time step,
wherein the excess energy differential prediction is determined based on the excess power production prediction and a time differential.

Clause 63: The method of any of the preceding Clauses, wherein at a time instance, the SUT is updated based on a scaling factor.

Clause 64: The method of Clause 63, wherein the scaling factor is determined based on a ratio between the energy produced until the time instance by the power source, and predicted energy production until the time instance.

Clause 65: The method of any of Clauses 45-64, wherein the SLT is a time-variant SLT.

27

Clause 66: The method of Clause 65, further comprising the step of determining a maximum battery charge power prediction based on a power production prediction of the power produced by the power source during the interval, a maximum charging power of the energy storage, and a predicted import limit.

Clause 67: The method of Clause 66, wherein the step of determining the time-variant SLT comprises:

determining a minimum SoS at the start of the interval; and
starting with the minimum SoS for the start of the interval as the time-variant SLT value in a succeeding time step, and proceeding in an iterative manner, determining for a current time step in a time period prior to the interval, a current value of the time-variant SLT, by subtracting a value of the power production prediction of the succeeding time step, from the value of the time-variant SLT in the succeeding time step, where the current value of the time-variant SLT is acting as the succeeding value of the time-variant SLT for the preceding time step.

Clause 68: The method of any of Clauses 66-67, wherein the interval is a pricing interval of the price of power imported from the power grid.

Clause 69: The method of any of Clauses 67-68, wherein the minimum SoS at the start of the interval is determined based on a load power consumption prediction of the load power,

Clause 70: The method of any of Clauses 67-68, wherein the minimum SoS is a minimum energy level desired for the load during the interval.

Clause 71: The method of any of Clauses 68-70, wherein the pricing interval is determined based on a pricing graph.

Clause 72: A method comprising

determining, by a controller a State of Storage (SoS) of an energy storage device;
determining by the controller, the level of the SoS relative to an SUT.
discharging, based on the level of the SoS being higher than the SUT, the energy storage to one or more of a load and a power grid, or charging only in case of excess power produced by the power source.
determining by the controller, based on the level of the SoS being lower than the SUT the level of the SoS relative to a soft SUT.
discharging, based on the level of the SoS being larger than the soft SUT, the energy storage to one or more of the load and the power grid, up to a predetermined power limit, or charging only in case of excess power produced by the power source.
determining by the controller, based on the level of the SoS being smaller than the soft SUT, the level of the SoS relative to an SLT.
charging, based on the level of the SoS being smaller than the SLT, the energy storage from one or more of the power source or the power grid, and do not discharge the energy storage.
determine by the controller, based on the level of the SoS being larger than the SLT, the level of the SoS relative to a soft SLT.
charging, based on the level of the SoS being smaller than the soft SLT the energy storage from one of more of the power source or the power grid up to a power limit, and do not discharge the energy storage.
determining by the controller, based on the level of the SoS being higher than the soft SLT, the level of import from the power grid.
discharging the energy storage based on the level of the import being higher than zero
determining, by the controller, the level of export to the power grid.
Charging, based on the level of export being higher than zero, the energy storage.

Clause 73: The system of Clause 2, wherein the controller is configured to control the storage interface to charge the energy storage based on the power produced by the power source is lower than the maximum output power of the power manager, the SoS being lower than the SUT, and the power produced by the power source being higher than the power drawn by the load.

Clause 74: The system of Clause 5, wherein the controller is configured to control the storage interface to charge the energy storage based on one of:

the power produced by the power source being lower than the maximum output power of the power manager, the SoS being lower than the SUT, and the SoS being lower than the SLT; or

the power produced by the power source being lower than the maximum output power of the power manager, the SoS being lower than the SUT, the SoS being higher than the SLT, and the power produced by the power source is higher than the power drawn by the load.

Clause 75: A method comprising:

determining:

a time-variant state-of-storage upper threshold (SUT);
a state-of-storage (SoS) of an energy storage;
a power drawn by a load;
a power produced by a power source;
a maximum output power of a power manager;

charging the power storage based on one of:
the power produced by the energy power source being lower than the maximum output power of the power manager, the SoS being lower than a time-variant state-of-storage upper threshold (SUT), and the power produced by the power source being higher than the power drawn by the load; and discharging the power storage based on one of:

the SoS being higher than the SUT; or
the power produced by the power source being lower than the maximum output power of the power manager, the SoS being lower than the SUT, and the power produced by the power source being lower than the power drawn by the load.

One or more aspects of the disclosure may be embodied in computer-usable data and computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the disclosure, and such data structures are contemplated within the scope of computer executable instructions and computer-usable data described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1.  A system comprising:

an energy storage;
a storage interface coupled to the energy storage and configured to charge or discharge the energy storage;
a controller configured to:

determine a state-of-storage (SoS) of the energy storage; and
control the storage interface to charge or discharge the energy storage based on the SoS of the energy storage, and based on a time-variant state-of-storage upper threshold (SUT).

2.  The system of claim 1, wherein the controller is further configured to control the storage interface to charge or discharge the energy storage based on a SoS lower threshold (SLT).

3. The system of any of claims 1-2 further comprising:

a power source configured to produce power;
a power manager having a maximum output power;
a load drawing a load power; and
a power grid,
wherein the power manager comprises the controller.

4. The system of claim 3, wherein the controller is configured to control the storage interface to charge the energy storage based on at least one of:

power produced by the power source being higher than the maximum output power of the power manager; or
the power produced by the power source being lower than the maximum output power of the power manager, the SoS being lower than the SUT, and the power produced by the power source being higher than the load power drawn by the load.

5. The system of any of claims 3-4, wherein the controller is configured to control the storage interface to discharge the energy storage based on at least one of:

power produced by the power source being lower than the maximum output power of the power manager, and the SoS being higher than the SUT; or
the power produced by the power source being lower than the maximum output power of the power manager, the SoS being lower than the SUT, and the power produced by the power source being lower than the load power drawn by the load.

6. The system of any of claims 3-5, wherein the controller is configured to determine a power for discharging the energy storage, and further configured to perform at least one of:

discharging the energy storage to the load based on the power produced by the power source being lower than the load power drawn by the load;
dissipating power based on the power produced by the power source being higher than the load power drawn by the load, and a grid limit of the power grid being reached;
discharging to the power gird based on the power produced by the power source being higher than the load power drawn by the load, the grid limit not being reached, and power not being imported from the power grid; or
reducing import from the power grid and discharging to the load based on the power produced by the power source being higher than the load power drawn by the load, the power gird limit not being reached, and power being imported from the power grid.

7. The system of any of claims 3-6, wherein the maximum output power of the power manager is a lower value of:

a power limit of the power manager, and
a sum of a grid limit, of the power grid, and a current power drawn by the load,
wherein the grid limit is a sum of a power imported from the power grid and an export limit.

8. The system of any of claims 3-7, wherein the power manager comprises:

a power converter configured to convert at least one of the power generated by the power source, power from the energy storage, or power from the power grid, to power ratings suitable for consumption by the load; and
a meter configured to perform at least one of:

monitoring power imported from the power grid; or
monitoring power exported to the power grid.

9. The system of any of claims 3-8, wherein the power source comprises a plurality of photovoltaic (PV) generators, and wherein one or more photovoltaic generators of the plurality of photovoltaic generators are configured to be coupled to a direct current to direct current (DC/DC) converter configured to extract power from respective PV generator according to a maximum power point tracking algorithm.

10. The system of any of claims 3-9, wherein the storage interface comprises a power converter configured to convert power from the energy storage to power ratings used by the power manager.

11. The system of any of claims 1-10, wherein the controller is further configured to determine the time-variant SUT for a selected time period by:

determining a target SoS at an end of the selected time period and proceeding in an iterative manner, wherein the target SoS is an initial SUT in a succeeding time step; and

determining, for each time step in the selected time period, a current value of the SUT by subtracting a value of an excess energy differential prediction of the succeeding time step from a value of the SUT in the succeeding time step,

wherein the current value of the SUT is configured to be a succeeding value of the SUT for a preceding time step, and

wherein the excess energy differential prediction is determined based on an excess power production prediction and a time differential.

12. A method comprising:

determining:

a time-variant state-of-storage upper threshold (SUT);
a state-of-storage (SoS) of an energy storage;
a power drawn by a load;
a power produced by a power source; and
a maximum output power of a power manager;

charging the energy storage based on one of:

the power produced by the power source being higher than the maximum output power of the power manager; or
the power produced by the power source being lower than the maximum output power of the power manager, the SoS being lower than the time-variant state-of-storage upper threshold (SUT), and the power produced by the power source being higher than the power drawn by the load; and

discharging the energy storage based on one of:

the power produced by the power source being lower than the maximum output power of the power manager, and the SoS being higher than the SUT; or
the power produced by the power source being lower than the maximum output power of the power manager, the SoS being lower than the SUT, and the power produced by the power source being lower than the power drawn by the load.

13. The method of claim 12, wherein the charging the energy storage and the discharging the energy storage are further based on a SoS lower threshold (SLT).

14. The method of any of claims 12-13, wherein the discharging the energy storage further comprises at least one of:

discharging the energy storage to the load based on the power produced by the power source being lower than the power drawn by the load;
dissipating power based on the power produced by the power source being higher than the power drawn by the load, and a grid limit of the power grid being reached;
discharging to the power grid based on the power produced by the power source being higher than the power drawn by the load, the grid limit not being reached and power not being imported from the power grid; or
reducing import from the power grid and discharging to the load based on the power produced by the power source being higher than the power drawn by the load, the grid limit not being reached and power being imported from the power grid.

15. The method of any of claims 12-14, wherein the determining the time-variant SUT comprises at least one of:

determining a target SoS at an end of a selected time period and proceeding in an iterative manner, wherein the target SoS is an initial SUT in a succeeding time step; and

determining, for each time step in the selected time period, a current value of the SUT by subtracting a value of an excess energy differential prediction of the succeeding time step from a value of the SUT in the succeeding time step,

wherein the current value of the SUT is configured to be a succeeding value of the SUT for a preceding time step, and

wherein the excess energy differential prediction is determined based on an excess power production prediction and a time differential.

Fig. 1A

Fig. 1B

EP 4 254 710 A1

POWER MANAGER

102 POWER SOURCE

$128_1$

$128_2$

108

POWER CONVERTER

112

CONTROLLER

110

COMMS.

113

SENSOR(S)

116

METER

114

$130_1$

$130_2$

118

ENERGY STORAGE

104

STORAGE INTERFACE

106

$132_1$

$132_2$

USER INTERFACE

107

$134_1$

$134_2$

MICRO-GIRD

124

100

Fig. 1C

Fig. 1D

LEGEND:
- UNUSED POWER
- POWER PRODUCTION BY POWER SOURCE
- LOAD CONSUMPTION

200

POWER

202

206

204

06:00   08:00   10:00   12:00   14:00   16:00   18:00   20:00

## Fig. 2A

208

SoS

- SoS
- MAXIMUM SoS

210

212

06:00   08:00   10:00   12:00   14:00   16:00   18:00   20:00

## Fig. 2B

Fig. 2C

POWER

300

·— ·· — · ·· — · POWER PRODUCTION BY POWER SOURCE

·· — · — · · — LOAD CONSUMPTION

302

304

06:00   08:00   10:00   12:00   14:00   16:00   18:00   20:00

## Fig. 3A

306

SoS

——————— SoS

— — — · MAXIMUM ALLOWED SoS

················ SoS UPPER THRESHOLD

308

310

312

06:00   08:00   10:00   12:00   14:00   16:00   18:00   20:00

A   B   C

## Fig. 3B

Fig. 3C

DETERMINE A TIME-VARIANT STATE-OF-STORAGE UPPER THRESHOLD (SUT) FOR AN ENERGY STORAGE

400

DETERMINE STATE-OF-STORAGE OF THE ENERGY STORAGE

402

DETERMINE POWER DRAWN BY A LOAD

404

DETERMINE THE POWER PRODUCED BY A POWER SOURCE

406

DETERMINE POWER MANGER MAXIMUM OUTPUT

408

POWER PRODUCED > POWER MANAGER MAXIMUM OUTPUT        YES

410        NO

STATE-OF-STORAGE > SUT        YES

412        NO

POWER PRODUCED > POWER DRAWN BY THE LOAD        YES

NO        414

DISCHARGE STORAGE        416

CHARGE STORAGE        418

Fig. 4A

EP 4 254 710 A1

DETERMINE A TIME-VARIANT STATE-OF-STORAGE UPPER THRESHOLD (SUT) AND A STATE-OF-STORAGE LOWER THRESHOLD (SLT) FOR AN ENERGY STORAGE

420

DETERMINE STATE-OF-STORAGE OF THE ENERGY STORAGE

422

DETERMINE POWER DRAWN BY A LOAD

424

DETERMINE THE POWER PRODUCED BY A POWER SOURCE

426

DETERMINE POWER MANAGER MAXIMUM OUTPUT

428

POWER PRODUCED > POWER MANAGER MAXIMUM OUTPUT    YES

430

NO

YES    STATE-OF-STORAGE > SUT

432

NO

STATE-OF-STORAGE ≤ SLT    YES

434

NO

NO    POWER PRODUCED > POWER DRAWN BY THE LOAD    YES

436

DISCHARGE STORAGE    438

CHARGE STORAGE    440

Fig. 4B

```
┌─────────────────────────────────────────────────────────────────────────────┐
│         DETERMINE A POWER LEVEL FOR CHARGING AN ENERGY STORAGE                 │
└─────────────────────────────────────────────────────────────────────────────┘
                                                                        └ 450
```

DETERMINE A POWER LEVEL FOR CHARGING AN ENERGY STORAGE ⟶ 450

NO ← (SLT-SoS)/ΔT > POWER PRODUCED BY POWER SOURCE ⟶ 452

YES

CHARGING FROM THE POWER GRID AVAILABLE? ⟶ 454

YES ⟶ DETERMINE A CHARGING POWER LEVEL FOR CHARGING FROM THE POWER GRID, AND A POWER LEVEL FOR CHARGING FROM THE POWER SOURCE ⟶ 456

NO

UPDATE THE POWER LEVEL FOR CHARGING THE ENERGY STORAGE ⟶ 458

CHARGE FROM THE POWER SOURCE ⟶ 460

TO PROCEDURE 402 (FIGURE 4A OR 4B)

CHARGE FROM THE POWER GRID, OR FROM THE POWER SOURCE ⟶ 462

TO PROCEDURE 402 (FIGURE 4A OR 4B)

Fig. 4C

DETERMINE A POWER LEVEL FOR DISCHARGING THE ENERGY STORAGE

470

POWER PRODUCED>
POWER DRAWN BY LOAD? — NO

472

YES

GRID LIMIT REACHED? — YES

476

NO

DISSIPATE

478

TO PROCEDURE 402
(FIGURE 4A OR 4B)

DISCHARGE TO THE LOAD

474

TO PROCEDURE 402
(FIGURE 4A OR 4B)

IMPORTING FROM POWER GRID ? — NO

YES

480

DISCHARGE TO THE LOAD AND REDUCE
IMPORT FROM THE POWER GRID

482

DISCHARGE TO THE
POWER GRID

484

TO PROCEDURE 402
(FIGURE 4A OR 4B)

TO PROCEDURE 402
(FIGURE 4A OR 4B)

Fig. 4D

Fig. 5A

Fig. 5B

EP 4 254 710 A1

| DETERMINE A LOAD POWER CONSUMPTION PREDICTION OF THE POWER PREDICTED TO BE DRAWN BY A LOAD DURING A TIME PERIOD |

~ 600

| DETERMINE A POWER PRODUCTION PREDICTION OF THE POWER PREDICTED TO BE PRODUCED BY A POWER SOURCE DURING THE TIME PERIOD |

~ 602

| DETERMINE AN EXPORT LIMIT |

~ 603

| DETERMINE A MAXIMUM OUTPUT POWER PREDICTION OF THE POWER MANAGER FOR THE TIME PERIOD |

~ 604

| DETERMINE AN EXCESS POWER PRODUCTION PREDICTION OF THE POWER PRODUCED BY THE POWER SOURCE DURING THE TIME PERIOD, BASED ON A DIFFERENCE BETWEEN THE POWER PRODUCTION PREDICTION AND THE MAXIMUM OUTPUT POWER PREDICTION OF THE POWER MANAGER |

~ 606

| DETERMINING A TIME-VARIANT STATE-OF-STORAGE UPPER THRESHOLD (SUT) FOR THE TIME PERIOD BASED ON THE EXCESS POWER PRODUCTION PREDICTIONS, AND A TARGET SoS AT THE END OF THE TIME PERIOD |

~ 608

Fig. 6

Fig. 7A

Fig. 7B

POWER

700

706

702

-----  POWER PRODUCTION PREDICTION
─ · ─ · ─  POWER PRODUCTION

06:00  08:00  10:00  12:00  14:00  16:00  18:00  20:00

## Fig. 7C

─ · ─ · ─  ACTUAL POWER PRODUCTION

─ · ─  LOAD CONSUMPTION PREDICTION

─────  SoS

..........  UPDATE SoS UPPER THRESHOLD

POWER

SoS

716

718

706

720

708

06:00  08:00  10:00  12:00  14:00  16:00  18:00  20:00

## Fig. 7D

Fig. 8A

Fig. 8B

DETERMINE A LOAD POWER CONSUMPTION PREDICTION OF THE POWER PREDICTED TO BE DRAWN BY A LOAD DURING AN INTERVAL

900

DETERMINE A POWER PRODUCTION PREDICTION OF THE POWER PREDICTED TO BE PRODUCED BY A POWER SOURCE DURING THE INTERVAL

902

DETERMINE A MAXIMUM BATTERY CHARGE POWER PREDICTION FOR THE TIME INTERVAL.

903

DETERMINE A MINIMUM SoS AT THE START OF AN INTERVAL BASED ON THE LOAD POWER CONSUMPTION PREDICTION

904

DETERMINING A TIME-VARIANT SoS LOWER THRESHOLD, BASED ON THE MINIMUM SoS AT THE END OF THE INTERVAL, AND THE MAXIMUM BATTERY CHARGE POWER PREDICTION

906

Fig. 9

EP 4 254 710 A1

1000

— · — · · — · · —  POWER PRODUCTION BY POWER SOURCE

— · — · —  LOAD CONSUMPTION PREDICTION

— — — — —  BATTERY MAX. CAPACITY

— — — — —  CONVERTER POWER RATING

— — — —  CONSUMPTION PREDICTION + EXPORT LIMIT

— — — —  PREDICTED POWER CONVERTER OUTPUT POWER (T)

Fig. 10A

1020

- — · · — · · — · ·   LOAD CONSUMPTION PREDICTION
- — — — — — —   BATTERY MAX. CAPACITY
- — · · — · · — · ·   POWER MANAGER MAXIMUM OUTPUT PREDICTION
- — · · · · · · · · — —   SOE UPPER THRESHOLD

POWER                                                                ENERGY

1006          1002

1026

1022

1024

1030

1028

06:00    08:00    10:00    12:00    14:00    16:00    18:00    20:00

Fig. 10B

1040

| | LOAD CONSUMPTION PREDICTION |
| --- | --- |
| | BATTERY MAX. CAPACITY |
| | CONVERTER POWER RATING |
| | POWER MANAGER MAXIMUM OUTPUT PREDICTION |
| | SOE UPPER THRESHOLD |

Fig. 10C

DETERMINE POWER RATING OF A CONVERTER POWER

1100

DETERMINE A PREDICTION OF TEMPERATURE DERATING OF THE POWER CONVERTER

1102

DETERMINE A PREDICTION OF THE THERMAL CYCLE OF THE POWER CONVERTER

1104

FOR A CORRESPONDING TIME INTERVAL
PREDICTION OF TEMPERATURE DERATING < CONVERTER POWER RATING?

1106

YES

NO

SET PREDICTED CONVERTER
OUTPUT POWER TO DERATED
POWER

1108

FOR THE CORRESPONDING TIME INTERVAL,
PREDICTED THERMAL CYCLE > THRESHOLD?

1110

YES

NO

SET PREDICTED CONVERTER OUTPUT POWER
TO MAXIMIZE POWER CONVERTER LIFETIME

1112

SET PREDICTED CONVERTER OUTPUT
POWER TO POWER CONVERTER RATING

1114

Fig. 11

Fig. 12

Europäisches
Patentamt

European
Patent Office

Office européen
des brevets

# EUROPEAN SEARCH REPORT

Application Number

EP 23 16 4859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 128 943 A1 (8ME NOVA LLC [US]) 13 August 2020 (2020-08-13) * paragraph [0005] – paragraph [0092]; figures 1a-12b * | 1-15 | INV. H02J3/32 H02J3/38 H02J7/00 |
| X | AU 2016 334 366 A1 (CON EDISON BATTERY STORAGE LLC [US]) 15 March 2018 (2018-03-15) * paragraph [0145] – paragraph [0189] * | 1-10, 12-14 | |
| A | JP 2021 052488 A (YAMABISHI CORP) 1 April 2021 (2021-04-01) * paragraph [0112] – paragraph [0123] * | 1-15 | |

TECHNICAL FIELDS
SEARCHED      (IPC)

H02J

The present search report has been drawn up for all claims

| Place of search | Date of completion of the search | Examiner |
|---|---|---|
| Munich | 14 July 2023 | Jonda, Sven |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 4859

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2023

| Patent document cited in search report | | Publication date | Patent family member(s) | | Publication date |
|---|---|---|---|---|---|
| CA 3128943 | A1 | 13-08-2020 | CA | 3128943 A1 | 13-08-2020 |
| | | | CN | 113646984 A | 12-11-2021 |
| | | | EP | 3921914 A1 | 15-12-2021 |
| | | | GB | 2596240 A | 22-12-2021 |
| | | | JP | 2022519736 A | 24-03-2022 |
| | | | KR | 20210125040 A | 15-10-2021 |
| | | | PE | 20211837 A1 | 15-09-2021 |
| | | | US | 2020259358 A1 | 13-08-2020 |
| | | | US | 2021226466 A1 | 22-07-2021 |
| | | | US | 2023208353 A1 | 29-06-2023 |
| | | | WO | 2020163749 A1 | 13-08-2020 |
| AU 2016334366 | A1 | 15-03-2018 | AU | 2016334366 A1 | 15-03-2018 |
| | | | EP | 3360228 A1 | 15-08-2018 |
| | | | US | 2017104336 A1 | 13-04-2017 |
| | | | WO | 2017062905 A1 | 13-04-2017 |
| JP 2021052488 | A | 01-04-2021 | JP | 6664680 B1 | 13-03-2020 |
| | | | JP | 2021052488 A | 01-04-2021 |

EPO FORM P0459

For more details about this annex : see Official Journal of the European Patent Office, No. 12/82

**EP 4 254 710 A1**

**Patent documents cited in the description**

- US 63324525